# EUROPEAN PATENT APPLICATION

(11) **EP 4 761 134 A1**
(43) Date of publication of application: **17.06.2026**
(21) Application number: 24864465.0
(22) Date of filing: 29.08.2024
(51) Int. Cl.: H04B 7/06

(54) **BEAMFORMING TRAINING METHOD AND APPARATUS**

(30) Priority: 12.09.2023 CN 202311184447
(71) Applicant: HUAWEI TECHNOLOGIES CO., LTD., Shenzhen 518129 (CN)
(72) Inventor: LI, Ying, Shenzhen, Guangdong 518129 (CN); HUANG, Lei, Shenzhen, Guangdong 518129 (CN); HU, Mengshi, Shenzhen, Guangdong 518129 (CN); GAN, Ming, Shenzhen, Guangdong 518129 (CN)
(74) Representative: Gill Jennings & Every LLP
(86) International application number: PCT/CN2024/115556
(87) International publication number: WO 2025/055743

(57) **Abstract**

This application relates to the field of communication technologies, and in particular, to a beamforming training method and an apparatus, to avoid a frame collision in time domain in a beamforming training process, and improve beamforming training efficiency. The method includes: A first communication apparatus (for example, an AP) receives first indication information from a second communication apparatus (for example, a STA), where the first indication information indicates an optimal transmit sector of the first communication apparatus; the first communication apparatus sends second indication information to the second communication apparatus, where the second indication information indicates a first slot group for the first communication apparatus to receive a first frame; and the first communication apparatus receives the first frame from the second communication apparatus in the first slot group in the optimal transmit sector.

## Description

### CROSS-REFERENCE TO RELATED APPLICATIONS

This application claims priority to Chinese Patent Application No. 202311184447.4, filed with the China National Intellectual Property Administration on September 12, 2023 and entitled "BEAMFORMING TRAINING METHOD AND APPARATUS", which is incorporated herein by reference in its entirety.

### TECHNICAL FIELD

This application relates to the field of communication technologies, and in particular, to a beamforming training method and an apparatus.

### BACKGROUND

A wireless local area network (wireless local area network, WLAN) has been developed for many generations. Standards formulated by the institute of electrical and electronics engineers (institute of electrical and electronics engineers, IEEE) include low-frequency standards below 7 GHz (GHz), such as 802.11a, 802.11b, 802.11g, 802.11n, 802.11ac, 802.11ax, and 802.11be, and further include high-frequency standards above 28 GHz, such as 802.11ad and 802.11ay standards running around 60 GHz.

Wireless transmission exhibits different characteristics depending on a frequency band. Low-frequency wireless transmission is characterized by slow signal attenuation and good wall penetration effect, but limited spectrum resources and a low transmission rate. High-frequency wireless transmission is characterized by fast signal attenuation and usually failing to penetrate a wall, but abundant spectrum resources and a high transmission rate. In addition, a high-frequency beam has good directivity, and directional transmission may be formed through beamforming of an antenna to broaden a transmission range, but beamforming training needs to be performed.

However, in a current beamforming training process, a station (station, STA) selects a slot based on a random backoff procedure to send a sector sweep (sector sweep, SSW) frame to an access point (access point, AP). SSW frames sent by different STAs may collide in time domain, which affects beamforming training efficiency.

### SUMMARY

Embodiments of this application provide a beamforming training method and an apparatus, to avoid a frame collision in time domain in a beamforming training process, and improve beamforming training efficiency.

According to a first aspect, an embodiment of this application provides a beamforming training method. The method includes: A first communication apparatus receives first indication information from a second communication apparatus, where the first indication information indicates an optimal transmit sector of the first communication apparatus; the first communication apparatus sends second indication information to the second communication apparatus, where the second indication information indicates a first slot group for the first communication apparatus to receive a first frame (or for the second communication apparatus to send a first frame); and the first communication apparatus receives the first frame from the second communication apparatus in the first slot group in the optimal transmit sector.

**In** the beamforming training method, the first communication apparatus may be a personal basic service set control point (personal basic service set control point, PCP)/an AP, a component (for example, a processor, a chip, or a chip system) of the PCP/AP, or an apparatus that is matched with the PCP/AP for use, and the second communication apparatus may be a STA, a component (for example, a processor, a chip, or a chip system) of the STA, or an apparatus that is matched with the STA for use. Alternatively, the first communication apparatus may be a PCP/an AP, a component of the PCP/AP, or an apparatus that is matched with the PCP/AP for use, and the second communication apparatus may be a PCP/an AP, a component of the PCP/AP, or an apparatus that is matched with the PCP/AP for use, which is different from the first communication apparatus. Alternatively, the first communication apparatus may be a STA, a component of the STA, or an apparatus that is matched with the STA for use, and the second communication apparatus may be a STA, a component of the STA, or an apparatus that is matched with the STA for use, which is different from the first communication apparatus.

According to the method, a process in which the second communication apparatus (for example, the STA) selects a slot based on a random backoff procedure to send a frame, and different second communication apparatuses contend for a time domain resource may be optimized into a process in which the second communication apparatus sends a frame based on scheduling by the first communication apparatus (for example, the AP). This can improve time domain resource utilization, avoid a time-domain collision between frames sent by different second communication apparatuses, and improve beamforming training efficiency.

**In** a possible design, the first slot group includes one slot. Compared with a case in which the first slot group includes a plurality of slots, according to the foregoing design, training efficiency can be further improved, and a waste of the time domain resource is avoided.

In a possible design, the first indication information is received by the first communication apparatus at a low frequency, the second indication information is sent by the first communication apparatus at the low frequency, and the first frame is received by the first communication apparatus at a high frequency.

According to the foregoing design, for information exchanged between the first communication apparatus and the second communication apparatus in a high-frequency beamforming training process, characteristics of slow attenuation and a long transmission distance of a low-frequency signal may be used for low-frequency sending and receiving, to further improve beamforming training reliability.

In a possible design, the method further includes: The first communication apparatus receives third indication information from the second communication apparatus, where the third indication information indicates a number N of sectors of the second communication apparatus; the first communication apparatus sends fourth indication information to the second communication apparatus, where the fourth indication information indicates a second slot group for the first communication apparatus to send a second frame, the second slot group includes P slots, and P is greater than or equal to N; and the first communication apparatus sends, in the second slot group in the optimal transmit sector, the second frame that is used to determine an optimal receive sector of the second communication apparatus, where the first frame is sent by the second communication apparatus in the optimal receive sector.

According to the foregoing design, the first communication apparatus does not need to send the second frame in all sectors of the first communication apparatus, and may send the second frame only in the optimal transmit sector that is of the first communication apparatus and that is indicated by the second communication apparatus. This can complete determining of the optimal receive sector of the second communication apparatus, and can further improve beamforming training efficiency.

In a possible design, before the first communication apparatus receives the first indication information from the second communication apparatus, the method further includes: The first communication apparatus receives third indication information from the second communication apparatus, where the third indication information indicates a number N of sectors of the second communication apparatus; the first communication apparatus sends fifth indication information to the second communication apparatus, where the fifth indication information indicates M third slot groups for the first communication apparatus to send a third frame, each third slot group includes Q slots, M is a number of sectors of the first communication apparatus, and Q is greater than or equal to N; and the first communication apparatus sends, in the M third slot groups, the third frame that is used to determine the optimal transmit sector of the first communication apparatus.

Optionally, the third frame sent by the first communication apparatus in the M third slot groups is further used to determine the optimal receive sector of the second communication apparatus, and the first frame is sent by the second communication apparatus in the optimal receive sector.

According to the foregoing design, during beamforming training, the first communication apparatus may schedule the third slot group based on the number of sectors of the second communication apparatus. This can further improve time domain resource utilization.

In a possible design, the second indication information further includes one or more of the following: start time, a sector identifier (identifier, ID), an antenna ID, and a number of included slots of the first slot group, and whether the first communication apparatus is in a receive mode or a transmit mode in the first slot group.

According to the foregoing design, information about the first slot group allocated by the first communication apparatus can be accurately indicated, which improves beamforming training reliability.

In a possible design, the method further includes: The first communication apparatus sends first trigger information to the second communication apparatus, where the first trigger information indicates the second communication apparatus to perform sending in the first slot group in the optimal receive sector.

According to the foregoing design, a sector used by the second communication apparatus can be accurately indicated, and a specific transceiver mode of the second communication apparatus can be indicated.

According to a second aspect, an embodiment of this application provides a beamforming training method. The method includes: A first communication apparatus receives third indication information from a second communication apparatus, where the third indication information indicates a number N of sectors of the second communication apparatus; the first communication apparatus sends sixth indication information to the second communication apparatus, where the sixth indication information indicates M fourth slot groups for the first communication apparatus to receive a fourth frame, M is a number of sectors of the first communication apparatus, each fourth slot group includes R slots, and R is greater than or equal to N; and the first communication apparatus receives, from the second communication apparatus in the M fourth slot groups, the fourth frame that is used to determine an optimal receive sector of the first communication apparatus and/or an optimal transmit sector of the second communication apparatus.

In the beamforming training method, the first communication apparatus may be a PCP/an AP, a component (for example, a processor, a chip, or a chip system) of the PCP/AP, or an apparatus that is matched with the PCP/AP for use, and the second communication apparatus may be a STA, a component (for example, a processor, a chip, or a chip system) of the STA, or an apparatus that is matched with the STA for use. Alternatively, the first communication apparatus may be a PCP/an AP, a component of the PCP/AP, or an apparatus that is matched with the PCP/AP for use, and the second communication apparatus may be a PCP/an AP, a component of the PCP/AP, or an apparatus that is matched with the PCP/AP for use, which is different from the first communication apparatus. Alternatively, the first communication apparatus may be a STA, a component of the STA, or an apparatus that is matched with the STA for use, and the second communication apparatus may be a STA, a component of the STA, or an apparatus that is matched with the STA for use, which is different from the first communication apparatus.

According to the foregoing design, training on the optimal receive sector of the first communication apparatus and the optimal transmit sector of the second communication apparatus is supported, so that a beamforming training requirement can be met when an antenna and an antenna pattern of the first communication apparatus do not have reciprocity and those of the second communication apparatus do not have reciprocity (that is, an optimal transmit sector and an optimal receive sector of a communication apparatus may be different).

In a possible design, the third indication information is received by the first communication apparatus at a low frequency, the sixth indication information is sent by the first communication apparatus at the low frequency, and the fourth frame is received by the first communication apparatus at a high frequency.

According to the foregoing design, for information exchanged between the first communication apparatus and the second communication apparatus in a high-frequency beamforming training process, characteristics of slow attenuation and a long transmission distance of a low-frequency signal may be used for low-frequency sending and receiving, to further improve beamforming training reliability.

In a possible design, R is determined based on a sum of numbers of sectors of K second communication apparatuses that include the second communication apparatus, and the K second communication apparatuses are communication apparatuses that perform beamforming training with the first communication apparatus.

According to the foregoing design, a requirement on a number of slots required when the AP simultaneously performs beamforming training on the K second communication apparatuses can be met.

In a possible design, the method further includes: The first communication apparatus sends fifth indication information to the second communication apparatus, where the fifth indication information indicates M third slot groups for the first communication apparatus to send a third frame, each third slot group includes Q slots, and Q is greater than or equal to N; and the first communication apparatus sends, in the M third slot groups, the third frame that is used to determine an optimal transmit sector of the first communication apparatus and/or an optimal receive sector of the second communication apparatus.

According to the foregoing design, during beamforming training, the first communication apparatus may schedule the third slot group based on the number of sectors of the second communication apparatus. This can further improve time domain resource utilization.

In a possible design, the sixth indication information further includes one or more of the following: start time, a sector ID, an antenna ID, and a number of included slots of each of the M fourth slot groups, and whether the first communication apparatus is in a receive mode or a transmit mode in each fourth slot group.

According to the foregoing design, information about the fourth slot group allocated by the first communication apparatus can be accurately indicated, which improves beamforming training reliability.

In a possible design, the method further includes: The first communication apparatus sends second trigger information to the second communication apparatus, where the second trigger information indicates the second communication apparatus to send the third frame in the M fourth slot groups in a sector sweep manner, and N slots used in each fourth slot group.

According to the foregoing design, a sector and slot used by the second communication apparatus can be accurately indicated, and a specific transceiver mode of the second communication apparatus can be indicated.

According to a third aspect, an embodiment of this application provides a beamforming training method. The method includes: A second communication apparatus sends first indication information to a first communication apparatus, where the first indication information indicates an optimal transmit sector of the first communication apparatus; the second communication apparatus receives second indication information from the first communication apparatus, where the second indication information indicates a first slot group for the first communication apparatus to receive a first frame (or for the second communication apparatus to send a first frame); and the second communication apparatus sends the first frame to the first communication apparatus in the first slot group, where the first communication apparatus receives the first frame in the first slot group in the optimal transmit sector.

In a possible design, the first slot group includes one slot.

In a possible design, the method further includes: The second communication apparatus sends third indication information to the first communication apparatus, where the third indication information indicates a number N of sectors of the second communication apparatus; the second communication apparatus receives fourth indication information from the first communication apparatus, where the fourth indication information indicates a second slot group for the first communication apparatus to send a second frame, the second slot group includes P slots, and P is greater than or equal to N; and the second communication apparatus receives, from the first communication apparatus in the second slot group, the second frame that is used to determine an optimal receive sector of the second communication apparatus, where the first frame is sent by the second communication apparatus in the optimal receive sector, and the second frame is sent by the first communication apparatus in the optimal transmit sector.

In a possible design, before the second communication apparatus sends the first indication information to the first communication apparatus, the method further includes: The second communication apparatus sends third indication information to the first communication apparatus, where the third indication information indicates a number N of sectors of the second communication apparatus; the second communication apparatus receives fifth indication information from the first communication apparatus, where the fifth indication information indicates M third slot groups for the first communication apparatus to send a third frame, each third slot group includes Q slots, M is a number of sectors of the first communication apparatus, and Q is greater than or equal to N; and the second communication apparatus receives, from the first communication apparatus in the M third slot groups, the third frame that is used to determine the optimal transmit sector of the first communication apparatus.

In a possible design, the third frame received by the second communication apparatus from the first communication apparatus in the M third slot groups is further used to determine the optimal receive sector of the second communication apparatus, and the first frame is sent by the second communication apparatus in the optimal receive sector.

In a possible design, before the second communication apparatus sends the first indication information to the first communication apparatus, the method further includes: The second communication apparatus determines to receive, in the optimal receive sector, the third frame sent by the first communication apparatus in the optimal transmit sector, where signal strength of the third frame is greater than or equal to a signal strength threshold.

In a possible design, the second indication information further includes one or more of the following: start time, a sector ID, an antenna ID, and a number of included slots of the first slot group, and whether the first communication apparatus is in a receive mode or a transmit mode in the first slot group.

In a possible design, the method further includes: The second communication apparatus receives first trigger information from the first communication apparatus, where the first trigger information indicates the second communication apparatus to perform sending in the first slot group in the optimal receive sector.

In a possible design, the first indication information is sent by the second communication apparatus at a low frequency, the second indication information is received by the second communication apparatus at the low frequency, and the first frame is sent by the second communication apparatus at a high frequency.

According to a fourth aspect, an embodiment of this application provides a beamforming training method. The method includes: A second communication apparatus sends third indication information to a first communication apparatus, where the third indication information indicates a number N of sectors of the second communication apparatus; the second communication apparatus receives sixth indication information from the first communication apparatus, where the sixth indication information indicates M fourth slot groups for the first communication apparatus to receive a fourth frame, M is a number of sectors of the first communication apparatus, each fourth slot group includes R slots, and R is greater than or equal to N; and the second communication apparatus sends, to the first communication apparatus in the M fourth slot groups, the fourth frame that is used to determine an optimal receive sector of the first communication apparatus and/or an optimal transmit sector of the second communication apparatus.

In a possible design, the method further includes: The second communication apparatus receives fifth indication information from the first communication apparatus, where the fifth indication information indicates M third slot groups for the first communication apparatus to send a third frame, each third slot group includes Q slots, and Q is greater than or equal to N; and the second communication apparatus receives, from the first communication apparatus in the M third slot groups, the third frame that is used to determine an optimal transmit sector of the first communication apparatus and/or an optimal receive sector of the second communication apparatus.

In a possible design, the sixth indication information further includes one or more of the following: start time, a sector ID, an antenna ID, and a number of included slots of each of the M fourth slot groups, and whether the first communication apparatus is in a receive mode or a transmit mode in each fourth slot group.

In a possible design, the method further includes: The second communication apparatus receives second trigger information from the first communication apparatus, where the second trigger information indicates the second communication apparatus to send the third frame in the M fourth slot groups in a sector sweep manner, and N slots used in each fourth slot group.

In a possible design, the third indication information is sent by the second communication apparatus at a low frequency, the sixth indication information is received by the second communication apparatus at the low frequency, and the fourth frame is sent by the second communication apparatus at a high frequency.

According to a fifth aspect, an embodiment of this application provides a communication apparatus. The apparatus has a function of implementing the method according to any one of the first aspect to the fourth aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to any one of the first aspect to the fourth aspect.

According to a sixth aspect, an embodiment of this application provides a communication apparatus. The communication apparatus includes an interface circuit and a processor, and the processor and the interface circuit are coupled to each other. The processor is configured to implement the method according to any one of the first aspect to the fourth aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory (that is, the processor and the memory are integrated).

In a possible implementation, the communication apparatus is a chip.

According to a seventh aspect, an embodiment of this application provides a beamforming training system. The system includes a first communication apparatus and a second communication apparatus. The first communication apparatus may be configured to implement the method according to the first aspect, and the second communication apparatus may be configured to implement the method according to the third aspect. Alternatively, the first communication apparatus may be configured to implement the method according to the second aspect, and the second communication apparatus may be configured to implement the method according to the fourth aspect.

According to an eighth aspect, an embodiment of this application provides a computer-readable storage medium. The computer-readable storage medium stores a computer program or instructions. When the computer program or the instructions are executed by a processor, the method according to any one of the first aspect to the fourth aspect may be implemented.

According to a ninth aspect, an embodiment of this application further provides a computer program product, including a computer program or instructions. When the computer program or the instructions are executed by a processor, the method according to any one of the first aspect to the fourth aspect may be implemented.

According to a tenth aspect, an embodiment of this application further provides a chip system. The chip system includes a processor. The processor is configured to be coupled to a memory. The memory is configured to store a program or instructions. When the program or the instructions are executed by the processor, the method according to any one of the first aspect to the fourth aspect may be implemented.

For technical effects that can be achieved in the third aspect to the tenth aspect, refer to the technical effects that can be achieved in the first aspect or the second aspect. Details are not described herein again.

### BRIEF DESCRIPTION OF DRAWINGS

FIG. 1 is a diagram of a network architecture according to an embodiment of this application;
FIG. 2 is a diagram of a beamforming training process according to an embodiment of this application;
FIG. 3 is a diagram of a high-frequency channel access procedure according to an embodiment of this application;
FIG. 4 is a diagram of a beacon frame according to an embodiment of this application;
FIG. 5 is a diagram of a channel allocation for a data transmission interval phase according to an embodiment of this application;
FIG. 6 is a diagram of a beamforming training allocation according to an embodiment of this application;
FIG. 7 is a diagram 1 of a beamforming training method according to an embodiment of this application;
FIG. 8 is a diagram of a process of determining an optimal transmit sector according to an embodiment of this application;
FIG. 9 is a diagram 1 of a format of second indication information according to an embodiment of this application;
FIG. 10 is a diagram 2 of a format of second indication information according to an embodiment of this application;
FIG. 11 is a diagram of a format of first trigger information according to an embodiment of this application;
FIG. 12 is a diagram of a process of determining an optimal sector according to an embodiment of this application;
FIG. 13 is an example 1 of a beamforming training process according to an embodiment of this application;
FIG. 14 is an example 2 of a beamforming training process according to an embodiment of this application;
FIG. 15 is a diagram 2 of a beamforming training method according to an embodiment of this application;
FIG. 16 is a diagram of a format of second trigger information according to an embodiment of this application;
FIG. 17 is an example 3 of a beamforming training process according to an embodiment of this application;
FIG. 18 is a diagram 1 of a structure of a communication apparatus according to an embodiment of this application; and
FIG. 19 is a diagram 2 of a structure of a communication apparatus according to an embodiment of this application.

### DESCRIPTION OF EMBODIMENTS

Embodiments of this application may be applicable to a local area network (local area network, LAN), and in particular, to a wireless local area network (wireless local area network, WLAN), for example, a WLAN that uses any one of institute of electrical and electronics engineers (institute of electrical and electronics engineers, IEEE) 802.11 series standards. For example, a WLAN that uses 802.11a, 802.11ab, 802.11g, 802.11n, 802.11ac, 802.11ax, 802.11be, 802.11ad, 802.11ay, Wi-Fi 8, or a next-generation standard is used. The WLAN may include one or more basic service sets (basic service set, BSS), and network nodes in the basic service set include a personal basic service set control point (personal basic service set control point, PCP)/an access point (access point, AP) and a station (station, STA).

Although embodiments of this application are mainly described by using an example of a deployed WLAN network, especially a network to which the IEEE 802.11 system standard is applied, a person skilled in the art easily understands that aspects of this application may be extended to other networks that use various standards or protocols, for example, Bluetooth (Bluetooth), a high-performance radio LAN (high performance radio LAN, HIPERLAN) (which is a wireless standard similar to the IEEE 802.11 standard, and mainly used in Europe), a wide area network (WAN), a personal area network (personal area network, PAN), or another known or later developed network. Therefore, regardless of used coverage and a used wireless access protocol, various aspects provided in this application may be applicable to any appropriate wireless network.

Embodiments of this application may alternatively be applicable to a wireless local area network like an internet of things (internet of things, IoT) network or a vehicle to everything (vehicle to X, V2X) network. Certainly, embodiments of this application may be further applicable to another possible communication system, for example, a long term evolution (long term evolution, LTE) communication system, a worldwide interoperability for microwave access (worldwide interoperability for microwave access, WiMAX) communication system, a 5th generation (5th generation, 5G) communication system, a 6th generation (6th generation, 6G) communication system, a future evolved communication system, or the like.

The foregoing communication systems to which this application is applicable are merely examples for description, and the communication systems to which this application is applicable are not limited thereto. Unified descriptions are provided herein, and are not described below again.

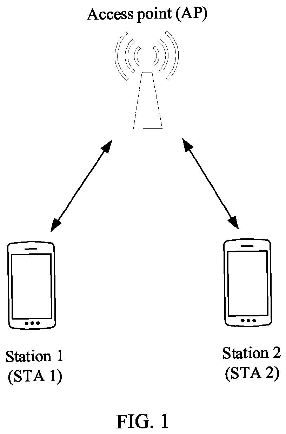

The following uses an example in which embodiments of this application are applicable to the WLAN. FIG. 1 is a diagram of a network architecture of a WLAN to which an embodiment of this application is applicable. In FIG. 1, for example, the WLAN includes one AP and two STAs, and the STAs are mobile phones. The STA associated with the AP can receive data sent by the AP, and can also send data to the AP. In embodiments of this application, communication between an AP and a STA is used as an example for description. It may be understood that embodiments of this application are also applicable to communication between APs. For example, the APs may communicate with each other through a distributed system (distributed system, DS). Alternatively, embodiments of this application are applicable to communication between STAs. For example, the STAs directly communicate with each other without using an AP.

The AP may be an access point for a terminal device to join a wired (or wireless) network. The AP is equivalent to a bridge that connects the wired network and the wireless network. A main function of the AP is to connect various wireless network clients together and then connect the wireless network to the Ethernet. For example, the AP may be a terminal device (for example, a mobile phone) or a network device (for example, a router, a switch, a bridge, or a communication server) with a mobile hotspot (Wi-Fi) chip. Optionally, the AP may be a device that supports a WLAN standard of an 802.11 family such as 802.11ax, 802.11ac, 802.11n, 802.11g, 802.11b, 802.11a, 802.11be (Wi-Fi 7), Wi-Fi 8, or a next-generation standard thereof. The AP in this application may be a high efficiency (high efficiency, HE) AP or an extremely high throughput (extremely high throughput, EHT) AP, or may be an AP applicable to a future-generation Wi-Fi standard.

The STA may be a wireless communication chip, a wireless sensor, a wireless communication terminal, or the like, and may also be referred to as a user. For example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, a computer that supports a Wi-Fi communication function, or the like. Optionally, the station may alternatively support a WLAN standard of the 802.11 family, for example, 802.11ax, 802.11ac, 802.11n, 802.11g, 802.11b, 802.11a, 802.11be (Wi-Fi 7), Wi-Fi 8, or a next-generation standard thereof.

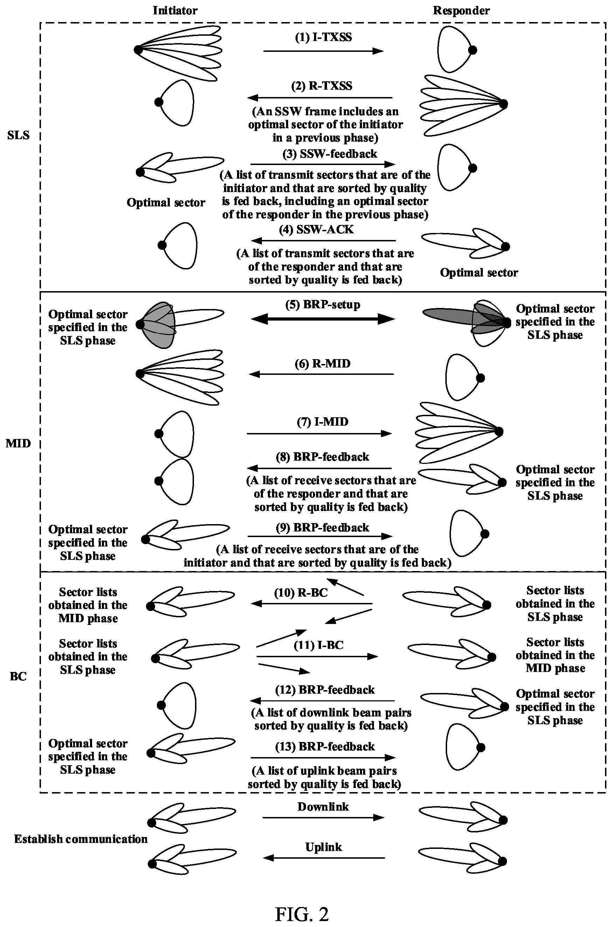

For ease of understanding by a person skilled in the art, the following explains and describes some terms in embodiments of this application.
(1) Sector: is a transmit or receive antenna pattern corresponding to a sector ID (a transmit or receive antenna pattern corresponding to a sector identifier (ID)).
(2) Optimal transmit sector: is a transmit sector from which a receive end receives a strongest signal.
   Optimal receive sector: is a receive sector in which the receive end receives a strongest signal.
(3) Slot group: is a slot set that includes at least one slot. Optionally, in a slot group, the AP uses a same sector for sending or receiving.
(4) Beamforming training (beamforming training, BFT): may also be referred to as beam shaping training. To implement data transmission and reception, a transmit beam direction of a data sender needs to cover a receive beam direction of a data receiver. In other words, a transmit beam can be aligned with a receive beam. In the IEEE 802.11ad/ay standard, a process of beam alignment between a PCP/an AP and a STA is referred to as a beamforming training process. As shown in FIG. 2, a beamforming training process may be divided into the following two processes.
   1. Sector-level sweep (sector-level sweep, SLS) process: In the process, transmit beam training is completed by sending a directional multi-gigabit (directional multi-gigabit, DMG) beacon (beacon) frame/sector sweep (sector sweep, SSW) frame (specified in the IEEE 802.11ad standard)/short (short) SSW frame (specified in the IEEE 802.11ay standard) through directional sweep, to obtain a transmit beam. As shown in FIG. 2, the SLS process may include the following phases.

### (1) Initiator-transmit sector sweep (initiator-transmit sector sweep, I-TXSS) phase

Specifically, the I-TXSS phase is used to train a transmit sector of an initiator. For example, the initiator (initiator, I) sends a beacon frame in each sector (sector) of the initiator (initiator, I) to discover a responder (responder, R). In this case, the responder receives the beacon frame in a quasi-omnidirectional mode.

### (2) Responder-transmit sector sweep (responder-transmit sector sweep, R-TXSS) phase

Specifically, the I-TXSS phase is used to train a transmit sector of the responder. For example, the responder sends an SSW frame in each sector of the responder, and feeds back an optimal transmit sector of the initiator in the previous phase, and the initiator receives the SSW frame in the quasi-omnidirectional mode.

### (3) Sector sweep feedback (sector sweep feedback, SSW-feedback) phase

Specifically, the SSW-feedback phase is used by the initiator to feed back an optimal transmit sector of the responder. For example, the initiator sends an SSW-feedback frame in the optimal transmit sector specified in the previous step, where the SSW-feedback frame indicates the optimal transmit sector of the responder. In this case, the responder receives the SSW-feedback frame in the quasi-omnidirectional mode.

### (4) Sector sweep acknowledgement (sector sweep ACK, SSW-ACK) phase

Specifically, the SSW-ACK phase is used by the responder to feed back the optimal transmit sector of the initiator. For example, the responder sends an SSW-ACK frame in the optimal transmit sector specified in the previous step, where the SSW-ACK frame indicates the optimal transmit sector of the initiator. In this case, the initiator receives the SSW-ACK frame in the quasi-omnidirectional mode.

2. Optional beam refinement protocol (beam refinement protocol, BRP) process: The process includes a multiple sector identifier (multiple sector identifier, MID) subprocess and a beam combining (beam combining, BC) subprocess. In this process, receive beam training is completed through exchange of a BRP frame (frame), to obtain a receive beam. In addition, an optimal transmit beam and an optimal receive beam of a sender and those of a receiver are determined through the BC process. As shown in FIG. 2, the BRP process may include the following phases.

### (5) Beam refinement protocol setup (BRP-setup) phase

Specifically, in the BRP-setup phase, some necessary information may be exchanged for a next BRP phase or beam refinement training (beam refinement transactions). For example, the initiator and the responder separately sends a beam refinement (BRP) frame in the optimal transmit sector determined in the previous phase. Correspondingly, the responder and the initiator receive the beam refinement frames in the quasi-omnidirectional mode, and obtain beam training capability information of their peers by using the beam refinement frames.

### (6) Responder-multiple sector identifier (responder-multiple sector identifier, R-MID) phase

Specifically, the R-MID phase is used to train a receive sector of the initiator. For example, the responder sends a BRP frame in the quasi-omnidirectional mode, and the initiator receives the BRP frame in each sector of the initiator.

### (7) Initiator-multiple sector identifier (initiator-multiple sector identifier, I-MID) phase

Specifically, the I-MID phase is used to train a receive sector of the responder. For example, the initiator sends a BRP frame in the quasi-omnidirectional mode, and feeds back an optimal receive sector of the initiator in the previous phase by using the BPR frame, and the responder receives the BRP frame in each sector of the responder.

### (8) BRP-feedback (feedback) phase

Specifically, the BRP-feedback phase is used by the responder to feed back an optimal receive sector of the responder. For example, the responder sends a BRP-feedback frame in the optimal transmit sector that is of the responder and that is specified previously, where the BRP-feedback frame indicates the optimal receive sector of the responder. In this case, the initiator receives the BRP-feedback frame in the quasi-omnidirectional mode.

### (9) BRP-feedback phase

Specifically, the BRP-feedback phase is used by the initiator to feed back the optimal receive sector of the initiator. For example, the initiator sends a BRP-feedback frame in the optimal transmit sector that is of the initiator and that is specified previously, where the BRP-feedback frame indicates the optimal receive sector of the initiator. In this case, the responder receives the BRP-feedback frame in the quasi-omnidirectional mode.

### (10) Responder-beam combining (responder-beam combining, R-BC) phase

Specifically, the R-BC phase is used to perform training to obtain a list of responder-to-initiator (that is, uplink) beam pairs sorted based on quality. For example, the responder sends BRP frames one by one in a list of transmit sectors obtained in the SLS phase; and the initiator receives the BRP frames one by one in a list of receive sectors obtained in the MID phase.

### (11) Initiator-beam combining (initiator-beam combining, I-BC) phase

Specifically, the I-BC phase is used to perform training to obtain a list of initiator-to-responder (that is, downlink) beam pairs sorted based on quality. For example, the initiator sends BRP frames one by one in a list of transmit sectors obtained in the SLS phase; and the responder receives the BRP frames one by one in a list of receive sectors obtained in the MID phase.

### (12) BRP-feedback phase

Specifically, the BRP-feedback phase is used by the responder to feed back a list of optimal downlink beam pairs. The responder sends a BRP-feedback frame in the optimal sector that is of the responder and that is specified previously, where the BRP-feedback frame indicates the optimal downlink beam pairs. In this case, the initiator receives the BRP-feedback frame in the quasi-omnidirectional mode.

### (13) BRP-feedback phase

Specifically, the BRP-feedback phase is used by the initiator to feed back a list of optimal uplink beam pairs. The initiator sends a BRP-feedback frame in the optimal sector that is of the initiator and that is specified previously, where the BRP-feedback frame indicates the optimal uplink beam pairs. In this case, the responder receives the BRP-feedback frame in the quasi-omnidirectional mode.

If the PCP/AP and the STA complete only the process 1, the PCP/AP and the STA may establish a link (a downlink) for directional sending and omnidirectional receiving. If the PCP/AP and the STA complete the processes 1 and 2, the PCP/AP and the STA may establish links (a downlink and an uplink) for directional sending and directional receiving.

However, a high-frequency link has obvious asymmetry, that is, a transmit power of the PCP/AP is greater than a transmit power of the STA. When the PCP/AP sends data in a directional sector, the STA can receive the data in the quasi-omnidirectional mode. However, when the STA sends data in a directional sector, the PCP/AP cannot receive the data in the quasi-omnidirectional mode. However, in a conventional beam training process shown in FIG. 2, the STA sends a frame in a directional sector, and the PCP/AP receives the frame in the quasi-omnidirectional mode (for example, the R-TXSS phase in FIG. 2). Therefore, the conventional beamforming training process cannot be used for the high-frequency link. In view of this, the IEEE 802.11ay standard proposes a method for performing BFT for an asymmetric link (asymmetric link), a high-frequency channel access procedure corresponding to the method, and BFT for an asymmetric link that is implemented based on the high-frequency channel access procedure. For details, refer to the following description of the high-frequency channel access procedure and BFT for an asymmetric link.

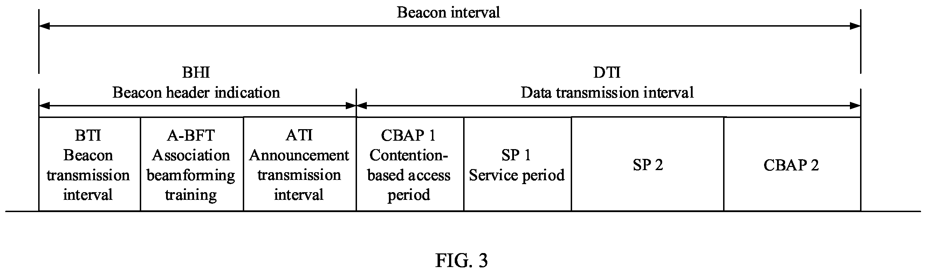

(5) High-frequency channel access procedure: Refer to a diagram of the high-frequency channel access procedure shown in FIG. 3. High-frequency channel access uses a beacon interval (beacon interval) as a period, which is divided into a beacon header indication (beacon header indication, BHI) and a data transmission interval (data transmission interval, DTI). The BHI includes a beacon transmission interval (beacon transmission interval, BTI), where the PCP/AP sends a plurality of DMG beacon frames in the BTI based on a sector ID for downlink sector sweep; association beamforming training (association beamforming training, A-BFT) that is used for association of the STA and uplink sector sweep; and an announcement transmission interval (announcement transmission interval, ATI), where the PCP/AP polls the STA for buffered data information and allocates a resource in the data transmission interval (data transmission interval, DTI) to the STA. The entire DTI is divided into several subintervals, and the subintervals are divided into a contention-based access period (contention-based access period, CBAP) and a service period (service period, SP) based on an access manner. In the SP, transmission scheduling is performed without contention.

(6) Beamforming training for an asymmetric link: Beamforming training for an asymmetric link (asymmetric link BFT) requires reciprocity of an antenna and an antenna pattern, that is, an optimal transmit sector and an optimal receive sector are the same for both the initiator and the responder. BFT for an asymmetric link is divided into two steps.

### Step 1: Scheduling in a BTI phase (scheduling)

BFT for an asymmetric link is initiated by the PCP/AP and needs to meet the following two requirements: (1) If BFT for an asymmetric link needs to be performed for a sector (that is, a combination of a sector (sector) and a DMG antenna (antenna)), a physical layer protocol data unit (PHY protocol data unit, PPDU) of a DMG beacon frame corresponding to the sector needs to include a training transponder (training-responder, TRN-R) subfield or field. (2) If BFT for an asymmetric link needs to be performed for a sector, an enhanced directional multi-gigabit (enhanced directional multi-gigabit, EDMG) extended schedule element (extended schedule element) needs to be further included in a PPDU of a DMG beacon frame corresponding to the sector, each element (element) needs to include at least one channel allocation (channel allocation) field, and an asymmetric beamforming training subfield (asymmetric beamforming training subfield) needs to be set to 1. The channel allocation field of the EDMG extended schedule element further includes a number of space-time slots (number of space-time slots) field that indicates a number of space-time slots allocated for the sector, and may be represented by *N_{STS}.*

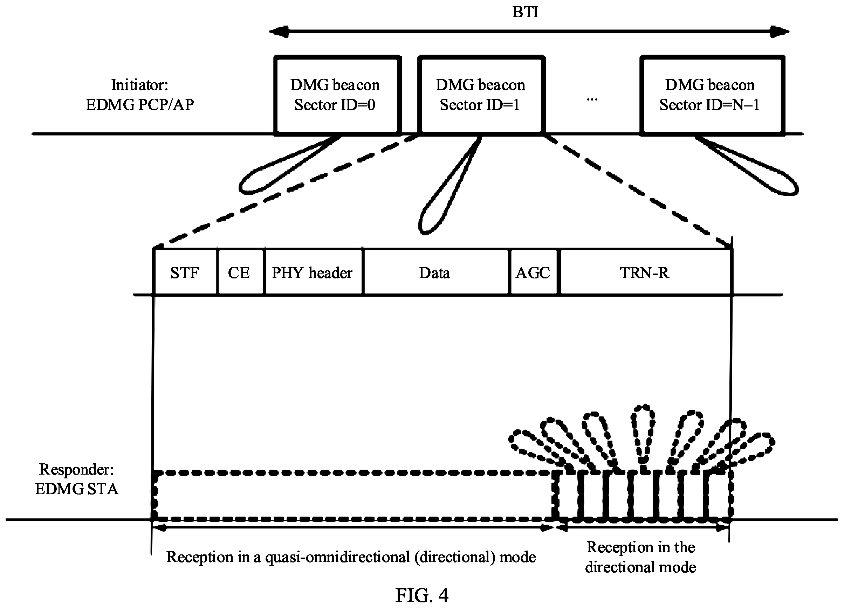

Refer to a diagram of a DMG beacon frame shown in FIG. 4. The initiator is an EDMG PCP/AP, and the responder is an EDMG STA. If BFT for an asymmetric link needs to be performed for a sector, the EDMG PCP/AP sends, in the sector, a DMG beacon frame meeting the foregoing requirements (in FIG. 4, a DMG beacon frame sent in a sector with a sector ID being 1 is used as an example). The EDMG STA first receives the TRN-R in the quasi-omnidirectional mode (STA in quasi-omni receive mode), and then the EDMG STA receives the TRN-R in a directional mode (STA in directional receive mode). By comparing all received signal strength indications (received signal strength indication, RSSI) in a quasi-omnidirectional reception phase, the EDMG STA can know which sector of the EDMG PCP/AP transmits a strongest signal to the EDMG STA, and determine an optimal transmit sector of the EDMG PCP/AP. By comparing all RSSIs in the PPDU during directional reception, the EDMG STA can know which sector in which the EDMG STA receives a strongest signal, and determine an optimal receive sector of the EDMG STA. The PPDU that carries the DMG beacon frame may include a short training field (short training field, STF) field, a channel estimation (channel estimation, CE) field, a physical layer header (PHY header) field, a data (data) field, an automatic gain control (automatic gain control, AGC) field, and a TRN-R field.

### Step 2: Beamforming training assignment or allocation (allocation) in the DTI phase

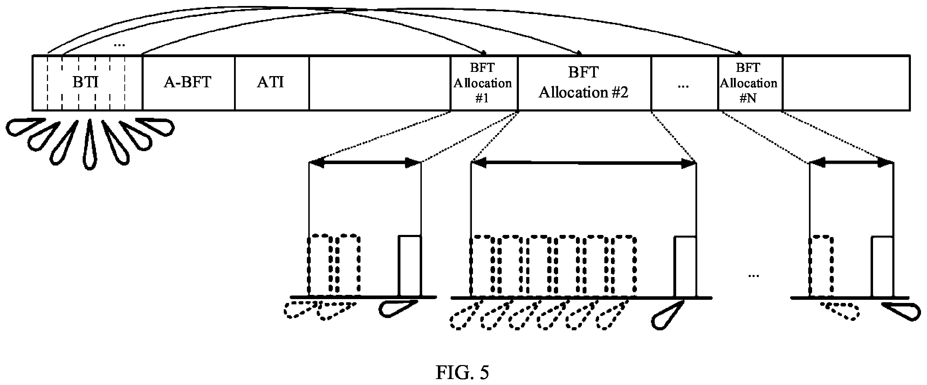

Through the first step, the EDMG STA already knows the optimal transmit sector of the EDMG PCP/AP and the optimal receive sector of the EDMG STA, but the EDMA PCP/AP does not know. Then, the optimal receive sector of the EDMG STA is used as a transmit sector, and the optimal transmit sector of the EDMG PCP/AP is used as a receive sector. Whether this is feasible in the uplink is verified, and the EDMG PCP/AP is notified of an established sector pair. Refer to a diagram of a channel allocation for the DTI phase shown in FIG. 5. The EDMG PCP/AP may perform, in the BTI phase, channel allocation for the DTI phase. Each channel allocation may correspond to a sector of the EDMG PCP/AP, and the EDMG PCP/AP listens to *N_{STS}* space-time slots (space-time slot) in a sector corresponding to each channel allocation.

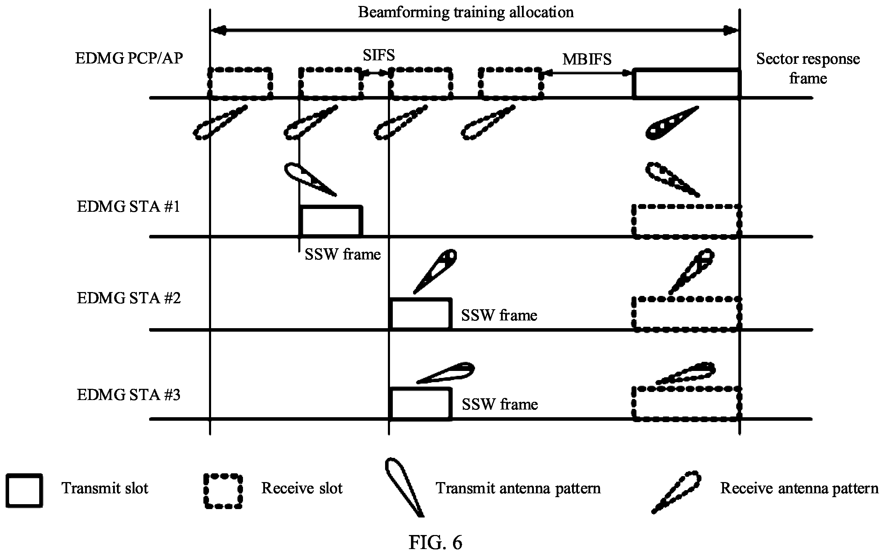

Refer to a diagram of a beamforming training allocation (beamforming training allocation) shown in FIG. 6. Each grid corresponding to the EDMG PCP/AP represents a channel allocation (channel allocation), and the EDMG PCP/AP listens to *N_{STS}* space-time slots in a same sector on each channel allocation. The EDMG STA selects a channel allocation corresponding to the sector (the optimal transmit sector of the EDMG PCP/AP) that transmits a strongest signal in the previous step, initiates a random backoff (backoff) procedure, and randomly selects an integer from 0 to *N_{STS}*-1*.* When a backoff count reaches 0, the EDMG STA uses a space-time slot corresponding to the backoff count that reaches 0, and sends an SSW frame in the optimal receive sector obtained in the previous step. If backoff values of a plurality of EDMG STAs are the same, space-time slots in which the plurality of EDMG STAs send SSW frames are the same. The sent SSW frames collide in time domain, and the EDMG STAs need to wait for next BFT for an asymmetric link. After sending is completed, the EDMG STA switches to the directional receive mode, and waits for the EDMG PCP/AP to send a sector ACK frame on the last channel allocation. Once the EDMG STA receives the ACK frame, it indicates that the link is successfully established.

However, it can be learned from the foregoing description of beamforming training for an asymmetric link that in a beamforming training solution currently applicable to the asymmetric link, the STA selects a slot based on a random backoff procedure, and sends an SSW frame to the PCP/AP. SSW frames sent by different STAs may collide in time domain, which affects beamforming training efficiency.

**In** view of this, embodiments of this application provide a beamforming training method and an apparatus, to avoid a frame collision in time domain in a beamforming training process, and improve beamforming training efficiency. The following describes in detail embodiments of this application with reference to accompanying drawings.

**In** addition, it should be understood that ordinal numbers such as "first" and "second" mentioned in embodiments of this application are used to distinguish between a plurality of objects, and are not intended to limit sizes, content, a sequence, a time sequence, priorities, importance, or the like of the plurality of objects. For example, a first frame and a second frame do not indicate that the two frames correspond to different priorities, importance degrees, or the like.

**In** embodiments of this application, unless otherwise specified, the number of a noun represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof means any combination of these items, including a single item (piece) or any combination of a plurality of items (pieces). For example, at least one item (piece) of a, b, or c represents: a, b, c, a and b, a and c, b and c, or a, b, and c. Herein, a, b, and c may be singular or plural.

The beamforming training method provided in embodiments of this application may be performed by a first communication apparatus and a second communication apparatus. The first communication apparatus may be a PCP/an AP, a component (for example, a processor, a chip, or a chip system) of the PCP/AP, or an apparatus that is matched with the PCP/AP for use, and the second communication apparatus may be a STA, a component (for example, a processor, a chip, or a chip system) of the STA, or an apparatus that is matched with the STA for use. Alternatively, the first communication apparatus may be a PCP/an AP, a component of the PCP/AP, or an apparatus that is matched with the PCP/AP for use, and the second communication apparatus may be a PCP/an AP, a component of the PCP/AP, or an apparatus that is matched with the PCP/AP for use, which is different from the first communication apparatus. Alternatively, the first communication apparatus may be a STA, a component of the STA, or an apparatus that is matched with the STA for use, and the second communication apparatus may be a STA, a component of the STA, or an apparatus that is matched with the STA for use, which is different from the first communication apparatus. The following describes the beamforming training method provided in this application by using an example in which the first communication apparatus and the second communication apparatus are respectively an AP and a STA.

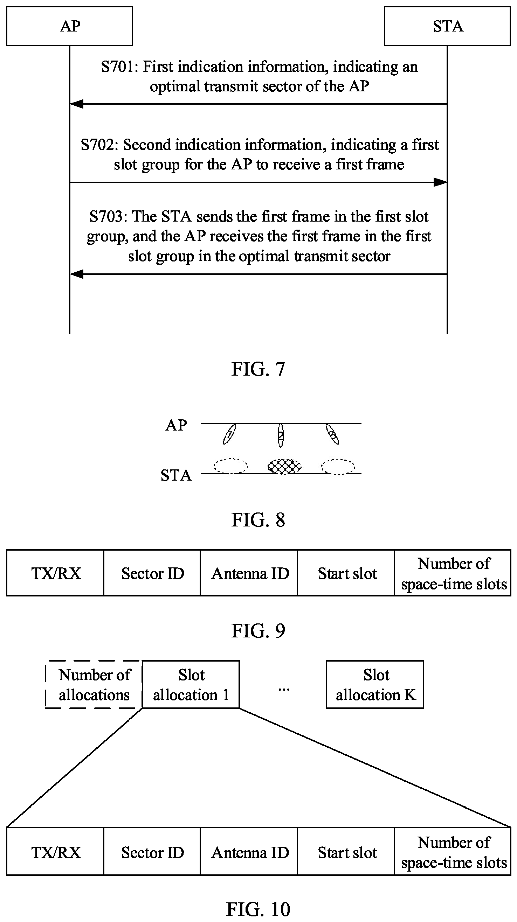

FIG. 7 shows a beamforming training method 1 according to an embodiment of this application. The method includes the following steps.

S701: The STA sends first indication information to the AP, and correspondingly, the AP receives the first indication information. The first indication information indicates an optimal transmit sector of the AP.

In this embodiment of this application, the STA may determine the optimal transmit sector of the AP by comparing signal strength (for example, RSSIs) of received signals sent by the AP in sectors, and after determining the optimal transmit sector of the AP, report the determined optimal transmit sector to the AP based on the first indication information.

In an example, refer to a diagram of a process of determining the optimal transmit sector shown in FIG. 8. The AP may separately send a null data packet (null data packet, NDP) frame in M sectors of the AP (in FIG. 8, M is equal to 3) in a directional sector sweep manner. The STA may receive, in a quasi-omnidirectional mode, the NDP frames sent by the AP in the sectors, and determine RSSIs of the received NDP frames sent by the AP in the sectors. The STA may determine, by comparing the RSSIs of the received NDP frames sent by the AP in all sectors, a sector that corresponds to the AP and that has a largest RSSI as the optimal transmit sector of the AP. For example, if an RSSI of an NDP frame that is received by the STA in a sector 2 and that is sent by the AP is the largest, the STA may determine that the optimal transmit sector of the AP is the sector 2.

In a possible implementation, before sending the first indication information to the AP, the STA may further determine that signal strength (for example, an RSSI) of a received NDP frame sent by the AP in the optimal transmit sector is greater than or equal to a signal strength threshold (for example, an RSSI threshold), to avoid continuing to perform beamforming training when a downlink between the AP and the STA does not meet a communication requirement, and avoid wasting a resource such as signaling.

It should be understood that the M sectors may be all sectors of the AP. In some implementations, if some sectors of the AP are not enabled, sectors in which beamforming training needs to be performed are only a part of sectors of the AP, and the M sectors may alternatively be the part of sectors in which the AP performs beamforming training. In addition, that the AP separately sends the NDP frame in the M sectors is merely an example. The AP may alternatively separately send a beacon (beacon) frame, an SSW frame, or the like in the M sectors. The STA may alternatively determine the optimal transmit sector of the AP based on the beacon frame, the SSW frame, or the like that is separately sent by the AP in the M sectors.

S702: The AP sends second indication information to the STA, and correspondingly, the STA receives the second indication information. The second indication information indicates a first slot group for the AP to receive a first frame (or for the STA to send a first frame).

The first slot group may include one or more slots.

S703: The STA sends the first frame to the AP in the first slot group, and correspondingly, the AP receives the first frame from the STA in the first slot group in the optimal transmit sector.

After receiving the first indication information from the STA, the AP may allocate the first slot group corresponding to the STA, and may send, to the STA, the second indication information indicating the first slot group. After receiving the second indication information, the STA may send the first frame to the AP in the first slot group. The AP is in a receive mode in the first slot group, and receives the first frame from the STA in the optimal transmit sector indicated by the first indication information. If the AP receives the first frame from the STA, it may indicate that communication can be performed in an uplink between the STA and the AP. The AP may alternatively send link acknowledgment information to the STA, to indicate (or notify) that communication can be performed in an uplink between the STA and the AP.

The first frame may be any one of the following frames: an NDP frame, a beacon frame, an SSW frame, or the like. The link acknowledgment information may be carried in an ACK frame or the like for sending. A specific implementation of sending the first frame and the link acknowledgment information is not limited in this application.

In some implementations, the first slot group may include a plurality of slots, and the STA may send the first frame to the AP in a part of or all slots in the first slot group. In some implementations, the first slot group may alternatively include only one slot, to avoid a waste of a time domain resource and improve training efficiency. To be specific, the STA sends the first frame to the AP in only one slot, and the AP receives the first frame from the STA in only one slot.

In a possible implementation, the second indication information may not include information about the first slot group. The STA may use a next slot of a slot occupied by the second indication information as a start slot (or start time) of the first slot group, and may determine that a number of slots included in the first slot group is a preset value, for example, 1.

In another possible implementation, the second indication information may alternatively include information about the first slot group, for example, may include start time of the first slot group and/or information about a number of included slots of the first slot group, and may further include one or more of information such as a sector ID and an antenna ID of the first slot group, and whether the AP is in a receive mode or a transmit mode in the first slot group.

Refer to a diagram of a format of second indication information shown in FIG. 9. The second indication information may include one or more of a start slot (start slot) field, a transmit/receive (TX/RX) field, a sector (sector) ID, an antenna (antenna) ID field, a number of space-time slots (number of space-time slots) field, and the like. The start slot field may indicate the start time of the first slot group; the transmit/receive field may indicate whether the AP is in the receive mode or the transmit mode in the first slot group; the sector ID field and the antenna ID field may jointly indicate a sector currently used by the AP; and the number of space-time slots field may indicate the number of included slots of the first slot group.

In some implementations, if the AP simultaneously performs beamforming training with a plurality of STAs, the AP may indicate a plurality of first slot groups through the second indication information, or may send first trigger information to the plurality of STAs, to indicate a slot group corresponding to each STA.

In an example, refer to a diagram of a format of a second indication information shown in FIG. 10. The second indication information may include K pieces of slot allocation (slot allocation) information (which may also be referred to as channel allocation (channel allocation) information), and the K pieces of slot allocation information one-to-one correspond to K first slot groups. For fields that may be included in each piece of slot allocation information and information indicated by the fields, refer to FIG. 9. Details are not described again. In addition, in some implementations, the second indication information may further include a number of allocations (number of allocations) field indicating a number of first slot groups.

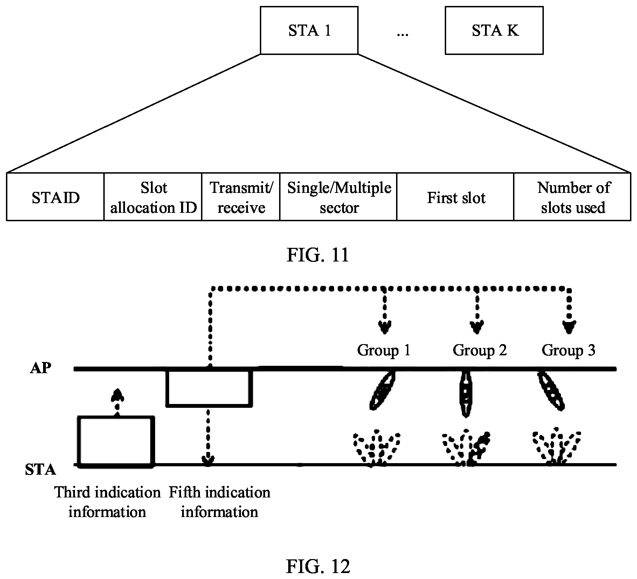

Refer to a diagram of a format of first trigger information shown in FIG. 11. The first trigger information may include K pieces of STA information (STA info). Each piece of STA information may include one or more of a STAID field and a slot allocation ID used (slot allocation ID used) field, and may further include one or more of a transmit/receive (TX/RX) field and a single/multiple sector (single/multi sector) field. The STAID field indicates a STA corresponding to the STA information; the slot allocation ID field indicates a first slot group used by the STA; the transmit/receive field indicates whether the AP is in the transmit mode or the receive mode; and when the AP is in the transmit mode, the single/multiple sector field indicates that the STA performs sending by using an optimal receive sector as a transmit sector or in a sector sweep manner, and when the AP is in the receive mode, the single/multiple sector field indicates that the STA performs receiving by using an optimal transmit sector as a receive sector or in the sector sweep manner. In addition, in some implementations, the first trigger information may further include a first slot (first slot) field and a number of slots used (number of slots used) field, which respectively indicate a slot position of a first slot and a number of slots that are used by the STA in the first slot group.

It should be understood that FIG. 10 and FIG. 11 are merely examples of the formats of the second indication information and the second trigger information. The second indication information and the second trigger information in other formats may be alternatively used as long as when the AP simultaneously performs beamforming training with the plurality of STAs, the AP can indicate the plurality of first slot groups through the second indication information, and can indicate, by sending the first trigger information to the plurality of STAs, the first slot group corresponding to each STA.

According to the beamforming training method, if determining that there is not an optimal receive sector, the STA sends the first frame to the AP in the quasi-omnidirectional mode. In this way, beamforming training on the downlink between the AP that performs directional sending (sending in the optimal transmit sector) and the STA that performs receiving in the quasi-omnidirectional mode, and on the uplink between the STA that performs sending in the quasi-omnidirectional mode and the AP that performs directional receiving (receiving in the optimal transmit sector) can be completed.

If determining that there is an optimal receive sector, the STA sends the first frame to the AP in the optimal receive sector. In this way, beamforming training on the downlink between the AP that performs directional sending (sending in the optimal transmit sector) and the STA that performs directional receiving (receiving in the optimal receive sector) and on the uplink between the STA that performs directional sending (sending in the optimal receive sector) and the AP that performs directional receiving (receiving in the optimal transmit sector) can be completed. The optimal receive sector of the STA may be determined in the following manners.

Manner 1: The AP may separately send an NDP frame in M sectors of the AP in a directional sector sweep manner. A PPDU that carries the NDP frame includes a TRN-R field. For the PPDU that carries the NDP frame and that is sent by the AP in each sector, the STA may first receive a non-TRN-R field in the quasi-omnidirectional mode, and then receive the TRN-R field in the sector sweep manner. The STA may determine, by comparing RSSIs of received PPDUs sent by the AP in the sectors, a sector that is of the AP and that corresponds to a largest RSSI as an optimal transmit sector of the AP. When comparing the received PPDU (the TRN-R field of the PPDU) sent by the AP in the optimal transmit sector, the STA receives an RSSI of the PPDU in each sector, and may determine a sector that is of the STA and that corresponds to the largest RSSI as an optimal receive sector. For example, if an RSSI of an NDP frame that is received by the STA and that is sent by the AP in a sector 2 is the largest, the STA may determine that the optimal transmit sector of the AP is the sector 2. For the NDP frame sent by the AP in the sector 2, if the RSSI is the largest when the STA receives the NDP frame in its sector 3, the STA may determine its sector 3 as the optimal receive sector.

Manner 2: The STA may further send third indication information to the AP. The third indication information indicates a number N of sectors of the STA. After receiving the third indication information from the STA, the AP may further send fourth indication information to the STA. The fourth indication information may indicate a second slot group for the AP to send a second frame, the second slot group includes P slots, and P is greater than or equal to N. The AP is in the transmit mode in the second slot group, and a sector used for sending is the optimal transmit sector indicated by the first indication information from the STA. The AP sends the second frame in the second slot group in the optimal transmit sector indicated by the first indication information, and the STA receives the second frame in the sector sweep manner to determine the optimal receive sector. In an example, the STA may sequentially receive, in its N sectors, the second frame in N slots of the second slot group in the sector sweep manner and in a directional mode, and may determine, as the optimal receive sector from N sectors, a sector that has a largest RSSI and in which the second frame is received.

Manner 3: With reference to FIG. 12, the STA may send third indication information to the AP. The third indication information indicates a number N of sectors of the STA. After receiving the third indication information from the STA, the AP may further send fifth indication information to the STA. The fifth indication information indicates M (M=3 is used as an example in FIG. 12) third slot groups for the AP to send a third frame. Each third slot group includes Q slots, M is a number of sectors of the AP, and Q is greater than or equal to N. The AP may send the third frame in the M third slot groups, and the STA may receive the third frame in the sector sweep manner, to determine the optimal transmit sector of the AP and/or the optimal receive sector of the STA.

In an example, the AP may send, in a sector in each third slot group, the third frame in the sector sweep manner. In FIG. 12, an example in which the AP sends the third frame in a sector 1 in a third slot group 1, sends the third frame in a sector 2 in a third slot group 2, and sends the third frame in a sector 3 in a third slot group 3 is used. The STA may sequentially receive, in its N sectors, the third frame in N slots of each third slot group in the sector sweep manner and in the directional mode, and determine an RSSI of the received third frame. By comparing all determined RSSIs, the STA may determine the optimal transmit sector of the AP and/or the optimal receive sector of the STA. For example, if an RSSI of the third frame that is received by the STA in its sector 3 and that is sent by the AP in the sector 2 of the AP is the largest, the STA may determine that the optimal transmit sector of the AP is the sector 2 of the AP, and the optimal receive sector of the STA is the sector 3 of the STA.

Manner 1 to Manner 3 are merely examples of determining the optimal receive sector of the STA. The optimal receive sector of the STA may be alternatively determined in another manner. A manner of determining the optimal receive sector of the STA is not limited in this application.

In some implementations, different from an existing beamforming training process in which the AP and the STA usually work at a high frequency, to improve reliability of transmission of indication information (such as the first indication information, the second indication information, and the third indication information) between the AP and the STA, in this embodiment of this application, characteristics of slow attenuation and a long transmission distance of a low-frequency signal may be used, and the AP and the STA may send and receive the indication information (such as the first indication information, the second indication information, and the third indication information) at a low frequency, and still send and receive frames (such as the first frame, the second frame, and the third frame) used for the optimal transmit sector, the optimal receive sector, a link test, or feedback at the high frequency.

According to the beamforming training method shown in FIG. 7, the STA can send the first frame based on a first slot group scheduled by the AP, to avoid a problem that frames sent by different STAs collide in time domain when the STA selects, based on a random backoff procedure, a slot to send a frame to the AP, which affects beamforming training efficiency.

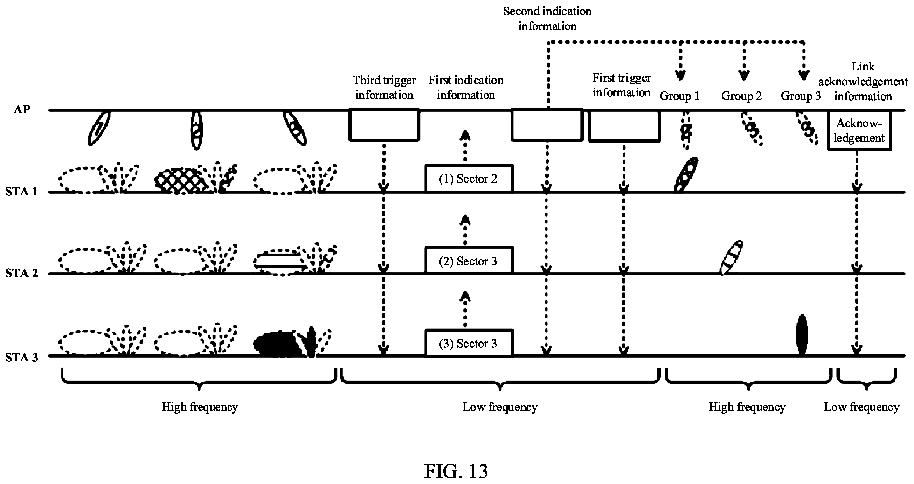

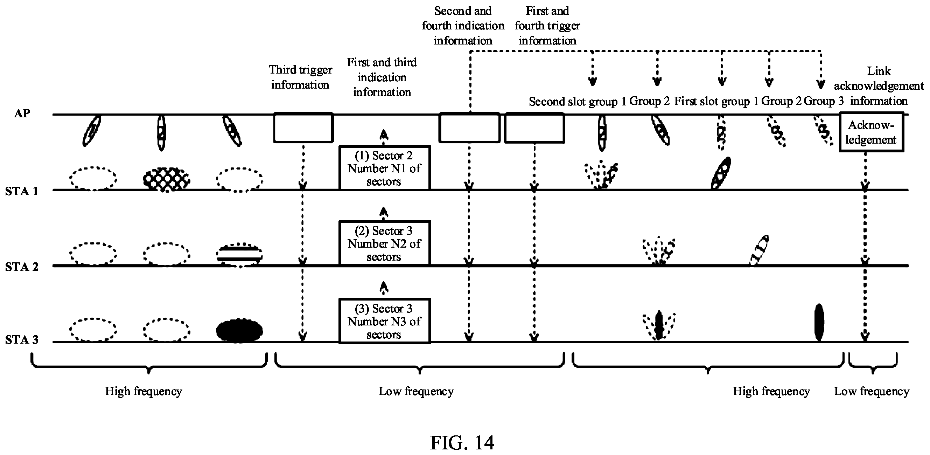

FIG. 13 and FIG. 14 are examples in which an AP and a plurality of STAs perform beamforming training based on the beamforming training method in this application in a multicast listener discovery (multicast listener discovery, MLD) protocol. In both FIG. 13 and FIG. 14, regardless of whether the AP and the STA perform an operation at a low frequency or perform an operation at a high frequency, a beamforming training process may be divided into four phases. The high frequency indicates that the AP and the STA implement sending or receiving at a high frequency, and the low frequency indicates that the AP and the STA implement sending or receiving at a low frequency.

FIG. 13 is an example 1 of the beamforming training process according to this application, including the following phases.

A1 phase: The AP may separately send an NDP frame in M sectors (for example, M is 3 in FIG. 13) of the AP in a directional sector sweep manner. A PPDU carrying the NDP frame includes a TRN-R field. For a PPDU that carries the NDP frame and that is sent by the AP in each sector, the STA may first receive a non-TRN-R field in a quasi-omnidirectional mode, and then receive the TRN-R field in a sector sweep manner and in a directional mode. The STA may determine, by comparing RSSIs of received PPDUs sent by the AP in the sectors, a sector that is of the AP and that corresponds to a largest RSSI as an optimal transmit sector of the AP. When comparing the received PPDU (the TRN-R field of the PPDU) sent by the AP in the optimal transmit sector, the STA receives an RSSI of the PPDU in each sector, and may determine a sector that is of the STA and that corresponds to the largest RSSI as an optimal receive sector. FIG. 13 is used as an example. If an RSSI of a PPDU that is received by a STA 1 in the quasi-omnidirectional mode and that is sent by the AP in a sector 2 is the largest, the STA 1 may determine that the optimal transmit sector for sending data by the AP to the STA 1 is the sector 2 of the AP. When the AP performs sending in the sector 2, if the RSSI in a sector 3 of the STA 1 is the largest, it may be determined that a third sector (for example, the sector 3) of the STA 1 is the optimal receive sector. Similarly, if an RSSI of a PPDU that is received by both a STA 2 and a STA 3 in the quasi-omnidirectional mode and that is sent by the AP in a sector 3 is the largest, it may be determined that the optimal transmit sector of the AP is the sector 3. When the AP performs sending in the sector 3, the STA 2 and the STA 3 respectively have a largest RSSI in a third sector (for example, a sector 3) of the STA 2 and a second sector (for example, a sector 2) of the STA 3, and may respectively determine that the third sector (for example, the sector 3) of the STA 2 and the second sector (for example, the sector 2) of the STA 3 as optimal transmit sectors.

In some implementations, the A1 phase may be performed at a high frequency, to help the STA determine the optimal receive sector of the STA and the optimal transmit sector of the AP at the high frequency to perform beamforming training.

A2 phase: Three STAs (the STA 1, the STA 2, and the STA 3) separately send first indication information (first indication information 1, first indication information 2, and first indication information 3) to the AP. The first indication information sent by each STA indicates the optimal transmit sector that is of the AP and that is determined by the STA. For example, in FIG. 13, the optimal sectors of the AP indicated by the first indication information 1, the first indication information 2, and the first indication information 3 that are sent by the STA 1, the STA 2, and the STR 3 to the AP are respectively the sector 2, the sector 3, and the sector 3 of the AP. After receiving the first indication information from the three STAs, the AP may allocate one first slot group to each STA. FIG. 13 is used as an example. The AP may respectively allocate a first slot group 1, a first slot group 2, and a first slot group 3 to the STA 1, the STA 2, and the STR 3 at a high frequency. The AP is in a receive mode in the first slot group 1, the first slot group 2, and the first slot group 3. Receive sectors are respectively the sector 2, the sector 3, and the sector 3 of the AP, and each first slot group includes one slot (slot).

The AP may send second indication information to the three STAs (the STA 1, the STA 2, and the STA 3) to indicate three first slot groups (the first slot group 1, the first slot group 2, and the first slot group 3), and may send first trigger information to the three STAs (the STA 1, the STA 2, and the STA 3) to indicate the STA 1 to send a first frame in the first slot group 1, the STA 2 to send the first frame in the first slot group 2, and the STA 3 to send the first frame in the first slot group 3.

In a possible implementation, after separately sending an NDP frame in M sectors (for example, M is 3 in FIG. 13) of the AP in the directional sector sweep manner at a high frequency, or after sending the NDP frame for specified duration, the AP may further send third trigger information (for example, a trigger frame) to the STA (for example, the STA 1, the STA 2, or the STA 3) at a low frequency, to trigger the STA to report the optimal transmit sector of the AP. After receiving the third trigger information from the AP, the STA sends the first indication information to the AP.

In some implementations, a process of exchanging the low-frequency information (such as the first indication information, the second indication information, and the third trigger information) may be completed in one transmission opportunity (transmission opportunity, TXOP).

In some implementations, the A2 phase may be performed at a low frequency, and reliability of information transmission between the AP and the STA may be improved by using characteristics of slow attenuation and a long transmission distance of a low-frequency signal.

A3 phase: Each STA sends the first frame to the AP in a first slot group corresponding to the STA. A transmit sector used by each STA is the optimal transmit sector determined by the STA in the A1 phase.

In a possible implementation, a PPDU that carries a first frame may include an identifier of the transmit sector used by the STA that sends the first frame. The identifier of the sector may include a sector ID and an antenna ID that correspond to the sector.

In some implementations, the A3 phase may be performed at a high frequency, to help accurately verify whether an uplink between the AP and the STA meets a communication requirement at the high frequency.

A4 phase: The AP sends link acknowledgment information.

In a possible implementation, for each STA, if the AP receives, the first frame from the STA in a first slot group corresponding to the STA, the AP may send the link acknowledgment information to the STA.

In some implementations, the A4 phase may be performed at a low frequency, and reliability of information transmission between the AP and the STA may be improved by using characteristics of slow attenuation and a long transmission distance of a low-frequency signal.

FIG. 14 is an example 2 of the beamforming training process according to this application, including the following phases.

B1 phase: The AP may separately send an NDP frame in M sectors (for example, M is 3 in FIG. 14) of the AP in a directional sector sweep manner. A PPDU carrying a first NDP frame may include a TRN-R field, or may not include a TRN-R field. For a PPDU that carries the NDP frame and that is sent by the AP in each sector, the STA may receive the PPDU in a quasi-omnidirectional mode. The STA may determine, by comparing RSSIs of received PPDUs sent by the AP in the sectors, a sector that is of the AP and that corresponds to a largest RSSI as an optimal transmit sector of the AP. FIG. 14 is used as an example. If an RSSI of a PPDU that is received by a STA 1 in the quasi-omnidirectional mode and that is sent by the AP in a sector 2 is the largest, the STA 1 may determine that the optimal transmit sector for sending data by the AP to the STA 1 is the sector 2 of the AP. Similarly, if an RSSI of a PPDU that is received by both a STA 2 and a STA 3 in the quasi-omnidirectional mode and that is sent by the AP in a sector 3 is the largest, it may be determined that the optimal transmit sector of the AP is the sector 3.

In some implementations, the B1 phase may be performed at a high frequency, to support the STA in determining the optimal transmit sector of the AP at the high frequency to perform beamforming training.

B2 phase: Three STAs (the STA 1, the STA 2, and the STA 3) separately send first indication information (first indication information 1, first indication information 2, and first indication information 3) and third indication information (third indication information 1, third indication information 2, and third indication information 3) to the AP. The first indication information sent by each STA indicates the optimal transmit sector that is of the AP and that is determined by the STA, and the third indication information sent by each STA indicates a number N of sectors of the STA. For example, in FIG. 14, the optimal sectors of the AP indicated by the first indication information 1, the first indication information 2, and the first indication information 3 that are sent by the STA 1, the STA 2, and the STR 3 to the AP are respectively the sector 2, the sector 3, and the sector 3 of the AP, the numbers of sectors indicated by the third indication information 1, the third indication information 2, and the third indication information 3 that are sent to the AP are respectively N1, N2, and N3. It may be understood that the first indication information and the second indication information that are sent by each STA may be sent through a same message (or frame), or may be sent through different messages (or frames). This is not limited in this application.

After receiving the first indication information and the third indication information from the three STAs (the STA 1, the STA 2, and the STA 3), the AP may allocate S second slot groups at a high frequency. The S second slot groups one-to-one correspond to S transmit sectors of the AP. A number of slots included in each second slot group may be determined based on a maximum number N of sectors of one or more STAs that use a transmit sector corresponding to the second slot group as an optimal transmit sector, the S transmit sectors are S sectors that are of the AP and that are determined as optimal transmit sectors by the three STAs (the STA 1, the STA 2, and the STA 3). FIG. 14 is used as an example. The optimal transmit sectors of the AP determined by the STA 1, the STA 2, and the STA 3 are respectively the sector 2, the sector 3, and the sector 3 of the AP. The AP may allocate two second slot groups at a high frequency, for example, a second slot group 1 and a second slot group 2. The AP is in a transmit mode in the second slot group 1 and the second slot group 2, and transmit sectors are respectively the sector 2 and the sector 3. A number of slots included in the second slot group 1 may be determined based on the number N1 of sectors of the STA 1, and may be an integer greater than or equal to N1. A number of slots included in the second slot group 2 may be determined based on the number N2 of sectors of the STA 2 and the number N3 of sectors of the STA 3, and may be an integer greater than or equal to max(N2, N3).

The AP may send fourth indication information to the three STAs (the STA 1, the STA 2, and the STA 3) to indicate two second slot groups (the second slot group 1 and the second slot group 2), and may send fourth trigger information to the three STAs (the STA 1, the STA 2, and the STA 3) to indicate the STA 1 to receive a second frame from the AP in the second slot group 1, and indicate the STA 2 and the STA 3 to receive the second frame from the AP in the second slot group 2.

In addition, the AP may alternatively separately allocate a first slot group 1, a first slot group 2, and a first slot group 3 to the STA 1, the STA 2, and the STR 3 at a high frequency, and send second indication information to the three STAs (the STA 1, the STA 2, and the STA 3) to indicate three first slot groups (the first slot group 1, the first slot group 2, and the first slot group 3), and may send first trigger information to the three STAs (the STA 1, the STA 2, and the STA 3) to indicate the STA 1 to send a first frame in the first slot group 1, the STA 2 to send the first frame in the first slot group 2, and the STA 3 to send the first frame in the first slot group 3. For implementation of the indication, refer to the implementation in the A2 phase. Details are not described again.

In a possible implementation, after separately sending an NDP frame in M sectors (for example, M is 3 in FIG. 14) of the AP in the directional sector sweep manner at a high frequency, or after sending the NDP frame for specified duration, the AP may further send third trigger information (for example, a trigger frame) to the STA (for example, the STA 1, the STA 2, or the STA 3) at a low frequency, to trigger the STA to report the optimal transmit sector and a number of sectors of the AP. After receiving the third trigger information from the AP, the STA sends the first indication information and the third indication information to the AP.

In a possible implementation, a process of exchanging low-frequency information in the B2 phase may be completed in one TXOP.

In some implementations, the B2 phase may be performed at a low frequency, and reliability of information transmission between the AP and the STA may be improved by using characteristics of slow attenuation and a long transmission distance of a low-frequency signal.

B3 phase: Each STA receives the second frame from the AP in a second slot group corresponding to the STA, determines an optimal transmit sector of the STA, and sends the first frame to the AP in a first slot group corresponding to the STA. A transmit sector used by each STA is the optimal transmit sector determined by the STA in the B1 phase.

In a possible implementation, a PPDU that carries a first frame may include an identifier of the transmit sector used by the STA that sends the first frame. The identifier of the sector may include a sector ID and an antenna ID that correspond to the sector.

In some implementations, the B3 phase may be performed at a high frequency, to support the STA in determining an optimal receive sector at the high frequency, and verify whether an uplink between the AP and the STA meets a communication requirement at the high frequency.

B4 phase: The AP sends link acknowledgment information.

In a possible implementation, for each STA, if the AP receives, the first frame from the STA in a first slot group corresponding to the STA, the AP may send the link acknowledgment information to the STA.

In some implementations, the B4 phase may be performed at a low frequency, and reliability of information transmission between the AP and the STA may be improved by using characteristics of slow attenuation and a long transmission distance of a low-frequency signal.

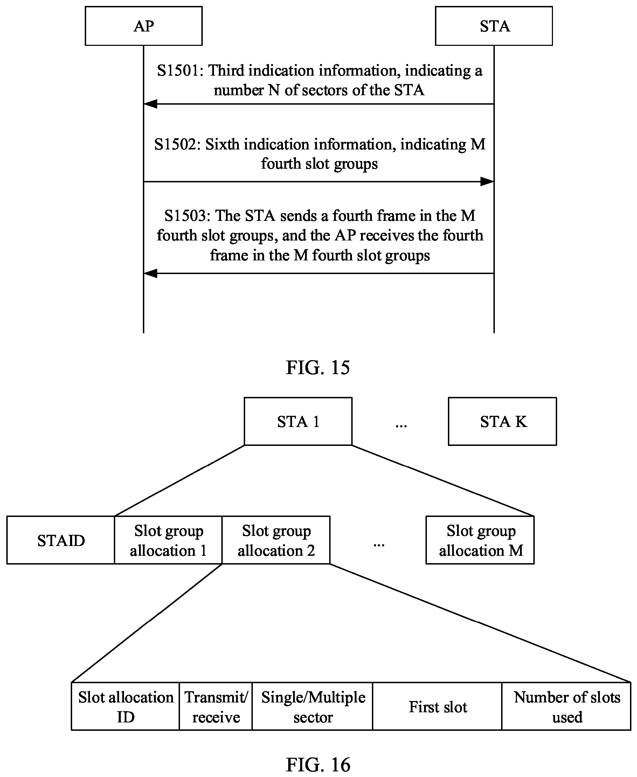

In some implementations, in a case in which an antenna and an antenna pattern of an AP do not have reciprocity and those of a STA do not have reciprocity, an optimal receive sector and an optimal transmit sector of the AP that corresponds to the STA may be different, and an optimal transmit sector and an optimal receive sector of the STA that corresponds to the AP may also be different. To further improve accuracy of beamforming training, in the case in which the antenna and the antenna pattern of the AP do not have reciprocity and those of the STA do not have reciprocity, the beamforming training method shown in FIG. 15 may be used, to determine the optimal transmit sector of the STA and/or the optimal receive sector of the AP. The method includes the following steps.

S1501: The STA sends third indication information to the AP, and correspondingly, the AP receives the third indication information. The third indication information indicates a number N of sectors of the STA.

S1502: The AP sends sixth indication information to the STA, and correspondingly, the STA receives the sixth indication information. The sixth indication information indicates M fourth slot groups for the AP to receive a fourth frame (or for the STA to send a fourth frame), M is a number of sectors of the AP, each fourth slot group includes R slots, and R is greater than or equal to N.

S1503: The STA sends the fourth frame in the M fourth slot groups, and correspondingly, the AP receives the fourth frame in the M fourth slot groups, where the fourth frame is used to determine the optimal transmit sector of the STA and/or the optimal receive sector of the AP.

In this embodiment of this application, the AP may allocate, based on the number N of sectors of the STA and the number M of sectors of the AP, the M fourth slot groups used to receive the fourth frame. In this way, the STA may sequentially send, in its N sectors in the sector sweep manner, the fourth frame to the AP in N slots of each fourth slot group in a directional mode. The AP may separately receive the fourth frame in the M fourth slots by using the M sectors of the AP, and determine an RSSI of the received fourth frame. By comparing all determined RSSIs, the AP may determine the optimal receive sector of the AP and/or the optimal transmit sector of the STA. For example, if an RSSI of the fourth frame that is received by the AP in its sector 3 and that is sent by the STA in a sector 2 of the STA is the largest, the AP may determine that the optimal receive sector of the AP is the sector 3 of the AP, and the optimal transmit sector of the STA is the sector 2 of the STA. For the determined optimal transmit sector of the STA, the AP may further indicate the optimal transmit sector of the STA to the STA, for sending uplink data between the STA and the AP.

In some implementations, the sixth indication information may include start time and a number of slots of each fourth slot group, and may further include one or more of information such as a sector ID and an antenna ID of each fourth slot group, and whether the AP is in a receive mode or a transmit mode in each fourth slot group. For a format that may be used for the sixth indication information, refer to the format used for the second indication information. Details are not described again.

In some implementations, if the AP simultaneously performs beamforming training with a plurality of STAs, the AP may further send second trigger information to the plurality of STAs, to indicate a slot used by each STA in the fourth slot group.

Refer to a diagram of a format of second trigger information shown in FIG. 16. The second trigger information may include K pieces of STA information (STA info). Each piece of STA information may include a STAID field and one or more slot group allocation fields, and each slot group allocation field corresponds to one fourth slot group. Each slot group allocation field may include a slot allocation ID used (slot allocation ID used) field, and may further include a transmit/receive (TX/RX) field, a single/multiple sector (single/multi sector) field, a first slot (first slot) field, and a number of slots used (number of slots used) field. The STAID field indicates a STA corresponding to the STA information; the slot allocation ID field indicates a fourth slot group used by the STA; the transmit/receive field indicates whether the AP is in the transmit mode or the receive mode; when the AP is in the transmit mode, the single/multiple sector field indicates that the STA performs sending by using an optimal receive sector as a transmit sector or in a sector sweep manner, and when the AP is in the receive mode, the single/multiple sector field indicates that the STA performs receiving by using an optimal transmit sector as a receive sector or in the sector sweep manner; and the first slot (first slot) field and the number of slots used (number of slots used) field respectively indicate a slot position of a first slot and a number of slots that are used by the STA in the fourth slot group.

It should be understood that the formats of the sixth indication information and the second trigger information are merely examples, and the sixth indication information and the second trigger information may include fewer or more fields than the foregoing fields.

In addition, if the AP and the STA further need to perform downlink beamforming training, for an optimal transmit sector of the AP and/or an optimal receive sector of the STA, refer to implementation in FIG. 7 and in Manner 1 to Manner 3. Details are not described again.

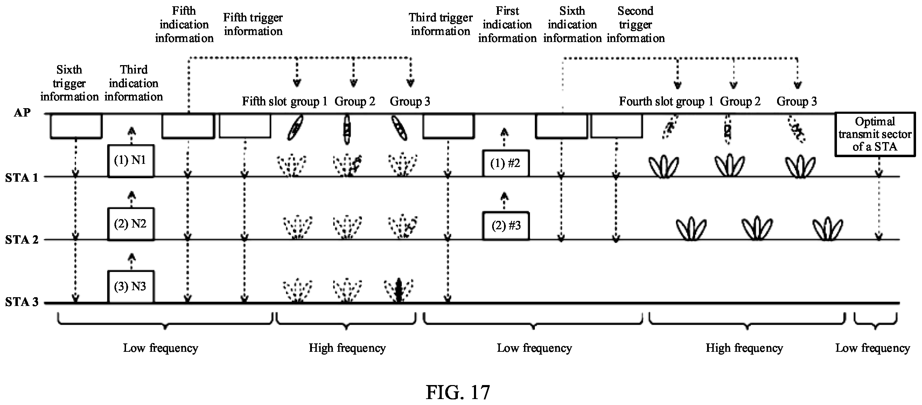

FIG. 17 is an example according to this application in which an AP and a plurality of STAs perform beamforming training based on the beamforming training method in this application. Regardless of whether the AP and the STA perform an operation at a low frequency or perform an operation at a high frequency, a beamforming training process may be divided into five phases. The high frequency indicates that the AP and the STA implement sending or receiving at a high frequency, and the low frequency indicates that the AP and the STA implement sending or receiving at a low frequency.

C1 phase: Three STAs (a STA 1, a STA2, and a STA 3) separately send third indication information (third indication information 1, third indication information 2, and third indication information 3) to the AP. The third indication information sent by each STA indicates a sector number N of the STA. For example, in FIG. 16, the numbers of sectors indicated by the third indication information 1, the third indication information 2, and the third indication information 3 that are sent by the STA 1, the STA 2, and the STA 3 to the AP are respectively N1, N2, and N3. The AP may allocate M third slot groups at a high frequency. The AP is in a transmit mode in the M third slot groups, and the AP performs sending in the M slot groups by using M sectors of the AP. A number Q of slots included in each third slot group may be determined based on max(N1, N2, N3), for example, is a maximum value of N1, N2, and N3.

The AP may indicate the M third slot groups by sending the fifth indication information to the three STAs (the STA 1, the STA 2, and the STA 3).

In a possible implementation, the three STAs may send the third indication information after establishing a connection to the AP, or may send the third indication information after receiving sixth trigger information that is from the AP and that is used to trigger reporting of a number of sectors. This is not limited in this application.

In some implementations, the C1 phase may be performed at a low frequency, and reliability of information transmission between the AP and the STA may be improved by using characteristics of slow attenuation and a long transmission distance of a low-frequency signal.

C2 phase: The AP sends a third frame in the M third slot groups, and each STA (the STA 1, the STA 2, or the STA 3) receives the third frame, to determine the optimal transmit sector of the AP and the optimal receive sector of the STA.

In an example, the AP may send, in a sector in each third slot group, the third frame in a sector sweep manner. In FIG. 16, an example in which the AP sends the third frame in a sector 1 in a third slot group 1, sends the third frame in a sector 2 in a third slot group 2, and sends the third frame in a sector 3 in a third slot group 3 is used. The STA (the STA 1 is used as an example) may sequentially receive, in its N1 sectors, the third frame in N1 slots of each third slot group in the sector sweep manner and in a directional mode, and determine an RSSI of the received third frame. The STA 1 may determine the optimal transmit sector of the AP and/or the optimal receive sector of the STA 1 by comparing all determined RSSIs. For example, if an RSSI of the third frame that is received by the STA 1 in its sector 3 and that is sent by the AP in the sector 2 of the AP is the largest, the STA 1 may determine that the optimal transmit sector of the AP is the sector 2 of the AP, and the optimal receive sector of the STA 1 is the sector 3 of the STA 1.

In a possible implementation, the STA may start to perform an operation in the C2 phase after receiving the fifth indication information from the AP, or may start to perform an operation in the C2 phase after receiving fifth trigger information from the AP. The fifth trigger information is used to trigger the STA to determine the optimal transmit sector of the AP and the optimal receive sector of the STA.

In some implementations, the C2 phase may be performed at a high frequency, to support the STA in determining the optimal transmit sector of the AP and the optimal receive sector of the STA at the high frequency to perform beamforming training.

C3 phase: Two STAs (the STA 1 and the STA 2) separately send first indication information (first indication information 1 and first indication information 2) to the AP. The first indication information sent by each STA indicates the optimal transmit sector that is of the AP and that is determined by the STA. For example, in FIG. 16, the optimal sectors of the AP indicated by the first indication information 1 and the first indication information 2 that are sent by the STA 1 and the STA 2 to the AP are respectively the sector 2 and the sector 3 of the AP.

**In** addition, the AP may further allocate M fourth slot groups at a high frequency. The AP is in a receive mode in the M fourth slot groups, and the AP separately performs receiving in the M fourth slot groups by using M sectors of the AP. A number R of slots included in each fourth slot group may be determined based on a sum of N1 and N2, for example, R is equal to N1+N2.

The AP may send sixth indication information to the two STAs (the STA 1 and the STA 2) to indicate the M fourth slot groups, and may send second trigger information to the STA 1 and the STA 2, to indicate slots used by the STA 1 and the STA 2 in each fourth slot group.

**In** the C2 phase, the STA 3 determines that signal strength of the third frame that is sent by the AP in the optimal transmit sector (the sector 3 of the AP) and that is received in the optimal receive sector (the sector 2 of the STA 3) is less than a signal strength threshold, and quality of a downlink between the AP and the STA 3 is low. In this case, in the C3 phase, the STA 3 may not report the first indication information, to save a resource such as signaling and improve training efficiency.

**In** some implementations, the C3 phase may be performed at a low frequency, and reliability of information transmission between the AP and the STA may be improved by using characteristics of slow attenuation and a long transmission distance of a low-frequency signal.

C4 phase: Each STA (the STA 1 or the STA 2) sends a fourth frame in the M fourth slot groups, and the AP receives the fourth frame in M fourth slots, and determines, for each STA, the optimal transmit sector of the AP and the optimal receive sector of the STA.

The STA 1 is used as an example. The STA 1 may sequentially send, in its N sectors, the fourth frame to the AP in N slots of each fourth slot group in the sector sweep manner and in a directional mode. The AP may separately receive the fourth frame in the M fourth slots by using the M sectors of the AP, and determine an RSSI of the received fourth frame. By comparing all determined RSSIs, the AP may determine the optimal receive sector of the AP and/or the optimal transmit sector of the STA 1.

**In** some implementations, the C4 phase may be performed at a high frequency, to support the AP in determining the optimal receive sector of the AP and the optimal transmit sector of the STA at the high frequency to perform beamforming training.

C5 phase: The AP notifies each STA of its optimal transmit sector, and may perform link acknowledgment.

In some implementations, the C5 phase may be performed at a low frequency, and reliability of information transmission between the AP and the STA may be improved by using characteristics of slow attenuation and a long transmission distance of a low-frequency signal.

It should be understood that in some implementations, the sector in the foregoing embodiments may also be referred to as a beam. For example, an optimal transmit sector may also be referred to as an optimal transmit beam, and an optimal receive sector may also be referred to as an optimal receive beam. In addition, in the foregoing embodiments, the beamforming training method in this application is described only by using an example in which the first communication apparatus is an AP and the second communication apparatus is a STA. Alternatively, the first communication apparatus and the second communication apparatus may be different APs, different STAs, or the like. Beamforming training between different communication apparatuses can be implemented by using the beamforming training method in this application.

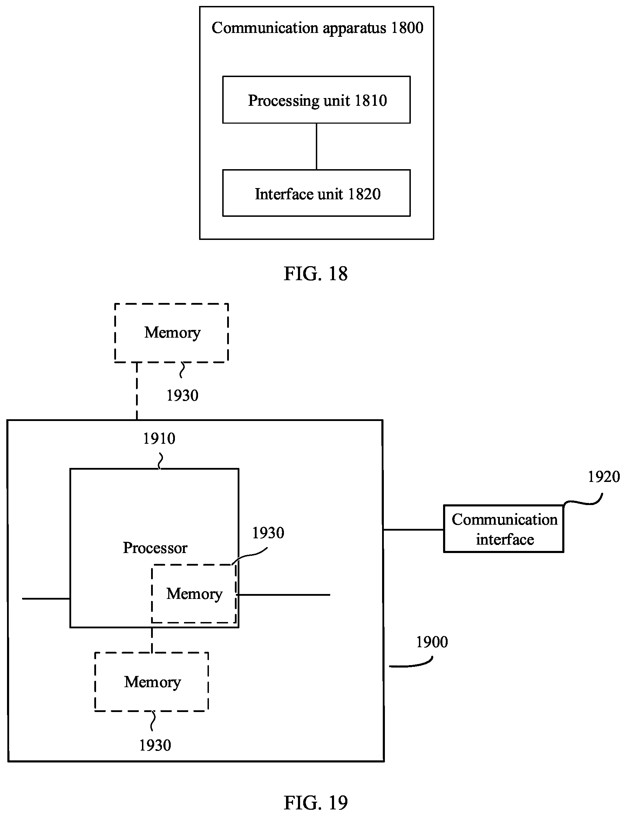

The following describes a communication apparatus provided in embodiments of this application. FIG. 18 is a diagram of a structure of the communication apparatus according to an embodiment of this application. The communication apparatus may include units or modules corresponding to all or a part of steps in the foregoing method embodiments, and may be configured to perform the steps performed by the first communication apparatus or the second communication apparatus in the foregoing embodiments. For details, refer to related descriptions in the foregoing method embodiments.

As shown in FIG. 18, a communication apparatus 1800 includes a processing unit 1810 and an interface unit 1820. The processing unit 1810 may be a processor or a processing circuit, and the interface unit 1820 may further be a transceiver unit or an input/output interface. The communication apparatus 1800 may be configured to implement the steps performed by the first communication apparatus or the second communication apparatus in the foregoing embodiments.

When the communication apparatus 1800 is configured to implement the steps performed by the first communication apparatus in the foregoing embodiments,
the interface unit 1820 is configured to: receive first indication information from the second communication apparatus, where the first indication information indicates an optimal transmit sector of the first communication apparatus; and send second indication information to the second communication apparatus, where the second indication information indicates a first slot group that is determined by the processing unit 1810 and that is for the first communication apparatus to receive a first frame; and
the interface unit 1820 is further configured to receive the first frame from the second communication apparatus in the first slot group in an optimal transmit sector.

For another implementation, refer to related descriptions of the first communication apparatus or the second communication apparatus in the foregoing embodiments. Details are not described herein again.

As shown in FIG. 19, this application further provides a communication apparatus 1900, including a processor 1910 and further including a communication interface 1920. The processor 1910 and the communication interface 1920 are coupled to each other. It may be understood that the communication interface 1920 may be a transceiver, an input/output interface, an input interface, an output interface, an interface circuit, or the like. Optionally, the communication apparatus 1900 may further include a memory 1930, configured to store instructions executed by the processor 1910, or store input data required by the processor 1910 to run the instructions, or store data generated after the processor 1910 runs the instructions. The memory 1930 may be a physically independent unit, or may be coupled to the processor 1910, or the processor 1910 includes the memory 1930.

When the communication apparatus 1900 is configured to implement the steps performed by the first communication apparatus and the second communication apparatus in the foregoing embodiments, the processor 1910 may be configured to implement a function of the processing unit 1810, and the communication interface 1920 may be configured to implement a function of the interface unit 1820.

It may be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially performed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from a network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Specifically, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A beamforming training method, comprising:
receiving, by a first communication apparatus, first indication information from a second communication apparatus, wherein the first indication information indicates an optimal transmit sector of the first communication apparatus;
sending, by the first communication apparatus, second indication information to the second communication apparatus, wherein the second indication information indicates a first slot group for the first communication apparatus to receive a first frame; and
receiving, by the first communication apparatus, the first frame from the second communication apparatus in the first slot group in the optimal transmit sector.

2. The method according to claim 1, wherein the method further comprises:
receiving, by the first communication apparatus, third indication information from the second communication apparatus, wherein the third indication information indicates a number N of sectors of the second communication apparatus;
sending, by the first communication apparatus, fourth indication information to the second communication apparatus, wherein the fourth indication information indicates a second slot group for the first communication apparatus to send a second frame, the second slot group comprises P slots, and P is greater than or equal to N; and
sending, by the first communication apparatus in the second slot group in the optimal transmit sector, the second frame, to determine an optimal receive sector of the second communication apparatus, wherein the first frame is sent by the second communication apparatus in the optimal receive sector.

3. The method according to claim 1, wherein before receiving, by the first communication apparatus, the first indication information from the second communication apparatus, the method further comprises:
receiving, by the first communication apparatus, third indication information from the second communication apparatus, wherein the third indication information indicates a number N of sectors of the second communication apparatus;
sending, by the first communication apparatus, fifth indication information to the second communication apparatus, wherein the fifth indication information indicates M third slot groups for the first communication apparatus to send a third frame, each third slot group comprises Q slots, M is a number of sectors of the first communication apparatus, and Q is greater than or equal to N; and
sending, by the first communication apparatus in the M third slot groups, the third frame, to determine the optimal transmit sector of the first communication apparatus.

4. The method according to claim 3, wherein the third frame sent by the first communication apparatus in the M third slot groups is further used to determine the optimal receive sector of the second communication apparatus, and the first frame is sent by the second communication apparatus in the optimal receive sector.

5. The method according to any one of claims 1 to 4, wherein the second indication information further comprises one or more of the following:
start time, a sector identifier ID, an antenna ID, and a number of comprised slots of the first slot group, and whether the first communication apparatus is in a receive mode or a transmit mode in the first slot group.

6. The method according to any one of claims 1 to 5, wherein the method further comprises:
sending, by the first communication apparatus, first trigger information to the second communication apparatus, wherein the first trigger information indicates the second communication apparatus to perform sending in the first slot group in the optimal receive sector.

7. The method according to any one of claims 1 to 6, wherein the first indication information is received by the first communication apparatus at a low frequency, and the second indication information is sent by the first communication apparatus at the low frequency; and
the first frame is received by the first communication apparatus at a high frequency.

8. A beamforming training method, comprising:
receiving, by a first communication apparatus, third indication information from a second communication apparatus, wherein the third indication information indicates a number N of sectors of the second communication apparatus;
sending, by the first communication apparatus, sixth indication information to the second communication apparatus, wherein the sixth indication information indicates M fourth slot groups for the first communication apparatus to receive a fourth frame, M is a number of sectors of the first communication apparatus, each fourth slot group comprises R slots, and R is greater than or equal to N; and
receiving, by the first communication apparatus from the second communication apparatus in the M fourth slot groups, the fourth frame that is used to determine an optimal receive sector of the first communication apparatus and/or an optimal transmit sector of the second communication apparatus.

9. The method according to claim 8, wherein R is determined based on a sum of numbers of sectors of K second communication apparatuses that comprise the second communication apparatus, and the K second communication apparatuses are communication apparatuses that perform beamforming training with the first communication apparatus.

10. The method according to claim 8 or 9, wherein the method further comprises:
sending, by the first communication apparatus, fifth indication information to the second communication apparatus, wherein the fifth indication information indicates M third slot groups for the first communication apparatus to send a third frame, each third slot group comprises Q slots, and Q is greater than or equal to N; and
sending, by the first communication apparatus in the M third slot groups, the third frame that is used to determine an optimal transmit sector of the first communication apparatus and/or an optimal receive sector of the second communication apparatus.

11. The method according to any one of claims 8 to 10, wherein the sixth indication information further comprises one or more of the following:
start time, a sector identifier ID, an antenna ID, and a number of comprised slots of each of the M fourth slot groups, and whether the first communication apparatus is in a receive mode or a transmit mode in each fourth slot group.

12. The method according to any one of claims 8 to 11, wherein the method further comprises:
sending, by the first communication apparatus, second trigger information to the second communication apparatus, wherein the second trigger information indicates the second communication apparatus to send the third frame in the M fourth slot groups in a sector sweep manner, and N slots used in each fourth slot group.

13. The method according to any one of claims 8 to 12, wherein the third indication information is received by the first communication apparatus at a low frequency, and the sixth indication information is sent by the first communication apparatus at the low frequency; and
the fourth frame is received by the first communication apparatus at a high frequency.

14. A beamforming training method, comprising:
sending, by a second communication apparatus, first indication information to a first communication apparatus, wherein the first indication information indicates an optimal transmit sector of the first communication apparatus;
receiving, by the second communication apparatus, second indication information from the first communication apparatus, wherein the second indication information indicates a first slot group for the first communication apparatus to receive a first frame; and
sending, by the second communication apparatus, the first frame to the first communication apparatus in the first slot group, wherein the first communication apparatus receives the first frame in the first slot group in the optimal transmit sector.

15. The method according to claim 14, wherein the method further comprises:
sending, by the second communication apparatus, third indication information to the first communication apparatus, wherein the third indication information indicates a number N of sectors of the second communication apparatus;
receiving, by the second communication apparatus, fourth indication information from the first communication apparatus, wherein the fourth indication information indicates a second slot group for the first communication apparatus to send a second frame, the second slot group comprises P slots, and P is greater than or equal to N; and
receiving, by the second communication apparatus from the first communication apparatus in the second slot group, the second frame that is used to determine an optimal receive sector of the second communication apparatus, wherein the first frame is sent by the second communication apparatus in the optimal receive sector, and the second frame is sent by the first communication apparatus in the optimal transmit sector.

16. The method according to claim 14, wherein before sending, by the second communication apparatus, the first indication information to the first communication apparatus, the method further comprises:
sending, by the second communication apparatus, third indication information to the first communication apparatus, wherein the third indication information indicates a number N of sectors of the second communication apparatus;
receiving, by the second communication apparatus, fifth indication information from the first communication apparatus, wherein the fifth indication information indicates M third slot groups for the first communication apparatus to send a third frame, each third slot group comprises Q slots, M is a number of sectors of the first communication apparatus, and Q is greater than or equal to N; and
receiving, by the second communication apparatus from the first communication apparatus in the M third slot groups, the third frame that is used to determine the optimal transmit sector of the first communication apparatus.

17. The method according to claim 16, wherein the third frame received by the second communication apparatus from the first communication apparatus in the M third slot groups is further used to determine the optimal receive sector of the second communication apparatus, and the first frame is sent by the second communication apparatus in the optimal receive sector.

18. The method according to claim 17, wherein before sending, by the second communication apparatus, the first indication information to the first communication apparatus, the method further comprises:
determining, by the second communication apparatus, to receive, in the optimal receive sector, the third frame sent by the first communication apparatus in the optimal transmit sector, wherein signal strength of the third frame is greater than or equal to a signal strength threshold.

19. The method according to any one of claims 14 to 18, wherein the second indication information further comprises one or more of the following:
start time, a sector identifier ID, an antenna ID, and a number of comprised slots of the first slot group, and whether the first communication apparatus is in a receive mode or a transmit mode in the first slot group.

20. The method according to any one of claims 14 to 19, wherein the method further comprises:
receiving, by the second communication apparatus, first trigger information from the first communication apparatus, wherein the first trigger information indicates the second communication apparatus to perform sending in the first slot group in the optimal receive sector.

21. The method according to any one of claims 14 to 20, wherein the first indication information is sent by the second communication apparatus at a low frequency, and the second indication information is received by the second communication apparatus at the low frequency; and
the first frame is sent by the second communication apparatus at a high frequency.

22. A beamforming training method, comprising:
sending, by a second communication apparatus, third indication information to a first communication apparatus, wherein the third indication information indicates a number N of sectors of the second communication apparatus;
receiving, by the second communication apparatus, sixth indication information from the first communication apparatus, wherein the sixth indication information indicates M fourth slot groups for the first communication apparatus to receive a fourth frame, M is a number of sectors of the first communication apparatus, each fourth slot group comprises R slots, and R is greater than or equal to N; and
sending, by the second communication apparatus to the first communication apparatus in the M fourth slot groups, the fourth frame that is used to determine an optimal receive sector of the first communication apparatus and/or an optimal transmit sector of the second communication apparatus.

23. The method according to claim 22, wherein the method further comprises:
receiving, by the second communication apparatus, fifth indication information from the first communication apparatus, wherein the fifth indication information indicates M third slot groups for the first communication apparatus to send a third frame, each third slot group comprises Q slots, and Q is greater than or equal to N; and
receiving, by the second communication apparatus from the first communication apparatus in the M third slot groups, the third frame that is used to determine an optimal transmit sector of the first communication apparatus and/or an optimal receive sector of the second communication apparatus.

24. The method according to claim 22 or 23, wherein the sixth indication information further comprises one or more of the following:
start time, a sector identifier ID, an antenna ID, and a number of comprised slots of each of the M fourth slot groups, and whether the first communication apparatus is in a receive mode or a transmit mode in each fourth slot group.

25. The method according to any one of claims 22 to 24, wherein the method further comprises:
receiving, by the second communication apparatus, second trigger information from the first communication apparatus, wherein the second trigger information indicates the second communication apparatus to send the third frame in the M fourth slot groups in a sector sweep manner, and N slots used in each fourth slot group.

26. The method according to any one of claims 22 to 25, wherein the third indication information is sent by the second communication apparatus at a low frequency, and the sixth indication information is received by the second communication apparatus at the low frequency; and
the fourth frame is sent by the second communication apparatus at a high frequency.

27. A communication apparatus, comprising a unit or a module configured to perform the method according to any one of claims 1 to 26.

28. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement, via a logic circuit or by executing instructions, the method according to any one of claims 1 to 26.

29. A computer program product, comprising a computer program or instructions, wherein when the computer program or the instructions are executed by a processor, the method according to any one of claims 1 to 26 is implemented.

30. A computer-readable storage medium, wherein the storage medium stores a computer program or instructions, and when the computer program or the instructions are executed by a processor, the method according to any one of claims 1 to 26 is implemented.

31. A chip system, wherein the chip system comprises a processor, the processor is configured to be coupled to a memory, the memory is configured to store a computer program or instructions, and when the computer program or the instructions are executed by the processor, the method according to any one of claims 1 to 26 is implemented.

32. A beamforming training system, comprising a first communication apparatus and a second communication apparatus, wherein
the first communication apparatus is configured to perform the method according to any one of claims 1 to 13; and
the second communication apparatus is configured to perform the method according to any one of claims 14 to 26.
